(19) **Europäisches Patentamt / European Patent Office / Office européen des brevets**

(11) **EP 4 509 764 A1**

(12) # EUROPEAN PATENT APPLICATION
published in accordance with Art. 153(4) EPC

(43) Date of publication:
**19.02.2025 Bulletin 2025/08**

(21) Application number: **23787360.9**

(22) Date of filing: **09.01.2023**

(51) International Patent Classification (IPC):
**F24F 1/0003** (2019.01)  **F24F 11/89** (2018.01)
**F24F 11/64** (2018.01)  **F24F 11/54** (2018.01)
**F24F 11/84** (2018.01)  **F24F 11/38** (2018.01)
**G06N 3/04** (2023.01)  **F24F 110/12** (2018.01)

(52) Cooperative Patent Classification (CPC):
**F24F 1/0003; F24F 11/38; F24F 11/54; F24F 11/84;**
**F24F 11/89; G06N 3/04;** F24F 2110/12;
F24F 2110/64

(86) International application number:
**PCT/CN2023/071431**

(87) International publication number:
**WO 2023/197711 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.04.2022  CN 202210386517**
**16.06.2022  CN 202210682549**

(71) Applicant: **QINGDAO HISENSE HITACHI AIR-
CONDITIONING SYSTEMS
CO., LTD.
Economic and Technical Development Zone
Qingdao, Shandong 266555 (CN)**

(72) Inventors:
• **SHI, Jingfeng**
  **Qingdao, Shandong 266555 (CN)**

• **REN, Zhaoting**
  **Qingdao, Shandong 266555 (CN)**
• **ZHANG, Jiashu**
  **Qingdao, Shandong 266555 (CN)**
• **RUAN, Daiwei**
  **Qingdao, Shandong 266555 (CN)**
• **XIA, Xingxiang**
  **Qingdao, Shandong 266555 (CN)**
• **SHENG, Kai**
  **Qingdao, Shandong 266555 (CN)**
• **CHEN, Huanxin**
  **Qingdao, Shandong 266555 (CN)**
• **GOU, Wei**
  **Qingdao, Shandong 266555 (CN)**

(74) Representative: **Casalonga
Casalonga & Partners
Bayerstraße 71/73
80335 München (DE)**

(54) **MULTI-SPLIT AIR-CONDITIONING SYSTEM, FAULT POSITIONING METHOD, AND FAULT DIAGNOSIS MODEL TRAINING METHOD**

(57) Some embodiments of the present disclosure provide a multi-split air-conditioning system, a fault positioning method, and a fault diagnosis model training method. The multi-split air-conditioning system comprises an outdoor unit, a plurality of indoor units, a plurality of electronic expansion valves, and a controller. An air pipe and a liquid pipe are correspondingly connected to each of the plurality of indoor units. The plurality of electronic expansion valves are respectively provided in the liquid pipes connected to the corresponding indoor units. The controller is configured to: obtain feature data of each of the plurality of indoor units in the event of an electronic expansion valve fault in the multi-split air-conditioning system, the feature data of each indoor unit comprising a temperature difference value between a temperature value of the liquid pipe correspondingly connected to the indoor unit and a temperature value of the air pipe correspondingly connected to the indoor unit; determining an abnormal indoor unit among the plurality of indoor units according to the feature data of each of the plurality of indoor units; and determining the electronic expansion valve corresponding to the abnormal indoor unit as a faulty electronic expansion valve.

**(Cont. next page)**

Obtain feature data of each of a plurality of indoor units 13 in the event of an electronic expansion valve fault in a multi-split air-conditioning system 10 — S101

Determine an abnormal indoor unit among the plurality of indoor units 13 according to the feature data of each of the plurality of indoor units 13 — S102

Determine the electronic expansion valve corresponding to the abnormal indoor unit as a faulty electronic expansion valve — S103

FIG. 6

**Description**

This application claims priority to Chinese Patent Application No. 202210386517.3, filed on April 11, 2022, and Chinese Patent Application No. 202210682549.8, filed on June 16, 2022, which are incorporated herein by reference in their entireties.

TECHNICAL FIELD

The present disclosure relates to the field of air conditioner technologies, and in particular, to a multi-split air-conditioning system, a fault positioning method, and a fault diagnosis model training method.

BACKGROUND

Multi-split air-conditioning systems include an outdoor unit and a plurality of indoor units, so as to adjust temperatures of a plurality of indoor spaces where the plurality of indoor units are located. There are a large number of components in the multi-split air-conditioning system. Therefore, when the multi-split air-conditioning system is faulty, it is difficult to quickly locate a faulty component, resulting in a low fault positioning efficiency of the multi-split air-conditioning system.

SUMMARY

In an aspect, a multi-split air-conditioning system is provided in some embodiments of the present disclosure. The multi-split air-conditioning system includes an outdoor unit, a plurality of indoor units, a plurality of electronic expansion valves, and a controller. Each of the plurality of indoor units is correspondingly connected with an air pipe and a liquid pipe, so as to communicate with the outdoor unit through the air pipe and the liquid pipe. The plurality of electronic expansion valves correspond to the plurality of indoor units. The plurality of electronic expansion valves are each disposed in the liquid pipe connected to the corresponding indoor unit and configured to control a refrigerant output amount or a refrigerant input amount of the corresponding indoor unit.

The controller is configured to: obtain feature data of each of the plurality of indoor units in a case where the electronic expansion valve in the multi-split air-conditioning system is faulty, the feature data of each indoor unit including a temperature difference between a temperature value of the liquid pipe correspondingly connected to the indoor unit and a temperature value of the air pipe correspondingly connected to the indoor unit; determine an abnormal indoor unit in the plurality of indoor units according to the feature data of each of the plurality of indoor units; and determine the electronic expansion valve corresponding to the abnormal indoor unit as a faulty electronic expansion valve.

In another aspect, a fault positioning method for a multi-split air-conditioning system is provided in some embodiments of the present disclosure. The multi-split air-conditioning system includes an outdoor unit, a plurality of indoor units, and a plurality of electronic expansion valves. Each of the plurality of indoor units is correspondingly connected with an air pipe and a liquid pipe, so as to communicate with the outdoor unit through the air pipe and the liquid pipe. The plurality of electronic expansion valves correspond to the plurality of indoor units. The plurality of electronic expansion valves are each disposed in the liquid pipe connected to the corresponding indoor unit and configured to control a refrigerant output amount or a refrigerant input amount of the corresponding indoor unit.

The method includes: obtaining feature data of each of the plurality of indoor units in a case where the electronic expansion valve in the multi-split air-conditioning system is faulty; the feature data of each indoor unit including a temperature difference between a temperature value of the liquid pipe correspondingly connected to the indoor unit and a temperature value of the air pipe correspondingly connected to the indoor unit; determining an abnormal indoor unit in the plurality of indoor units according to the feature data of each of the plurality of indoor units; and determining the electronic expansion valve corresponding to the abnormal indoor unit as a faulty electronic expansion valve.

In yet another aspect, a fault diagnosis model training method for a multi-split air-conditioning system is provided in some embodiments of the present disclosure. The training method includes: obtaining normal values and faulty values of a plurality of operating data of a first multi-split air-conditioning system; determining a first feature offset space of the first multi-split air-conditioning system based on the normal values and the faulty values of the plurality of operating data of the first multi-split air-conditioning system; the first feature offset space including a difference between the faulty value and the normal value of each of the plurality of operating data of the first multi-split air-conditioning system; correcting the first feature offset space to obtain a second feature offset space of a second multi-split air-conditioning system based on differences between the normal values of the plurality of operating data of the first multi-split air-conditioning system and normal values of a plurality of operating data of the second multi-split air-conditioning system; determining faulty values of the plurality of operating data of the second multi-split air-conditioning system based on the normal values of the plurality of operating data and the second feature offset space of the second multi-split air-conditioning system; and training a fault diagnosis model based on the normal values and the faulty values of the plurality of operating data of the second multi-split air-conditioning system.

BRIEF DESCRIPTION OF THE DRAWINGS

In order to describe the technical solutions in the present disclosure more clearly, accompanying drawings to be used in some embodiments of the present disclosure will be introduced briefly below. However, the accompanying drawings to be described below are merely accompanying drawings of some embodiments of the present disclosure, and a person of ordinary skill in the art may obtain other drawings according to these drawings. In addition, the accompanying drawings to be described below may be regarded as schematic diagrams, but are not limitations on an actual size of a product, an actual process of a method, and an actual timing of a signal involved in the embodiments of the present disclosure.

FIG. 1 is a diagram showing a structure of a multi-split air-conditioning system, in accordance with some embodiments;
FIG. 2 is a diagram showing another structure of a multi-split air-conditioning system, in accordance with some embodiments;
FIG. 3 is a diagram showing a structure of a controller, in accordance with some embodiments;
FIG. 4 is a diagram showing an interaction between a controller and a terminal device, in accordance with some embodiments;
FIG. 5 is a diagram showing an interface of a terminal device, in accordance with some embodiments;
FIG. 6 is a flow chart of a fault positioning method for a multi-split air-conditioning system, in accordance with some embodiments;
FIG. 7 is a diagram showing another interface of a terminal device, in accordance with some embodiments;
FIG. 8 is a diagram showing yet another interface of a terminal device, in accordance with some embodiments;
FIG. 9 is a diagram showing positions of a first temperature sensor and a second temperature sensor, in accordance with some embodiments;
FIG. 10 is another flow chart of a fault positioning method for a multi-split air-conditioning system, in accordance with some embodiments;
FIG. 11 is yet another flow chart of a fault positioning method for a multi-split air-conditioning system, in accordance with some embodiments;
FIG. 12 is a diagram showing yet another interface of a terminal device, in accordance with some embodiments;
FIG. 13 is a flow chart of a fault diagnosis model training method for a multi-split air-conditioning system, in accordance with some embodiments;
FIG. 14 is another flow chart of a fault diagnosis model training method for a multi-split air-conditioning system, in accordance with some embodiments;
FIG. 15 is a diagram showing a structure of a fault diagnosis model, in accordance with some embodiments;
FIG. 16 is yet another flow chart of a fault diagnosis model training method for a multi-split air-conditioning system, in accordance with some embodiments;
FIG. 17 is yet another flow chart of a fault diagnosis model training method for a multi-split air-conditioning system, in accordance with some embodiments; and
FIG. 18 is a diagram showing a structure of an auto-encoder model, in accordance with some embodiments.

DETAILED DESCRIPTION

Technical solutions in some embodiments of the present disclosure will be clearly and completely described below with reference to the accompanying drawings. However, the described embodiments are merely some but not all embodiments of the present disclosure. All other embodiments obtained by a person of ordinary skill in the art based on embodiments of the present disclosure shall be included in the protection scope of the present disclosure.

Unless the context requires otherwise, throughout the description and the claims, the term "comprise" and other forms thereof such as the third-person singular form "comprises" and the present participle form "comprising" are construed as an open and inclusive meaning, i.e., "including, but not limited to." In the description, the terms such as "one embodiment," "some embodiments," "exemplary embodiments," "example," "specific example," or "some examples" are intended to indicate that specific features, structures, materials, or characteristics related to the embodiment(s) or example(s) are included in at least one embodiment or example of the present disclosure. Schematic representations of the above terms do not necessarily refer to the same embodiment(s) or example(s). In addition, the specific features, structures, materials, or characteristics may be included in any one or more embodiments or examples in any suitable manner.

Hereinafter, the terms such as "first" and "second" are used for descriptive purposes only and are not to be construed as indicating or implying the relative importance or implicitly indicating the number of indicated technical features. Thus, features defined by "first" or "second" may explicitly or implicitly include one or more of the features. In the description of the embodiments of the present disclosure, the term "a plurality of" or "the plurality of" means two or more unless otherwise specified.

In the description of some embodiments, the terms "coupled" and "connected" and their derivatives may be used. The term "connected" should be understood in a broad sense. For example, the term "connected" may represent a fixed connection, a detachable connection, or a one-piece connection, or may represent a direct connection, or may represent an indirect connection through an intermediate medium. The term "coupled," for example, indicates that two or more components are in direct physical or electrical contact with each other. The term "coupled" or "communicatively coupled" may also mean that two or more components are not in direct contact with each other, but still cooperate or interact with each other. The embodiments disclosed herein are not necessarily limited to the content herein.

The phrase "A and/or B" includes the following three combinations: only A, only B, and a combination of A and B.

The use of the phase "configured to" herein means an open and inclusive expression, which does not exclude devices that are configured to perform additional tasks or steps.

In addition, the use of the phrase "based on" herein has an open and inclusive meaning, since a process, step, calculation, or other actions that is "based on" one or more of the stated conditions or values may, in practice, be based on additional conditions or values exceeding those stated.

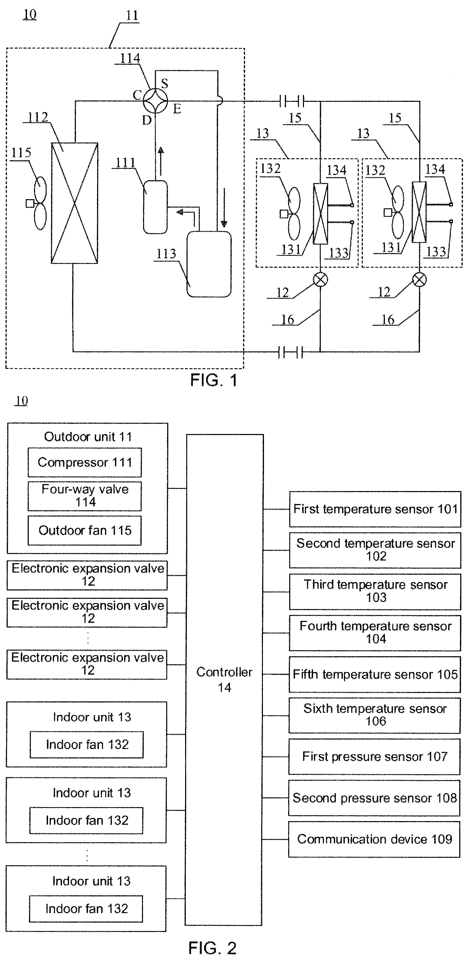

In some embodiments of the present disclosure, a multi-split air-conditioning system 10 is provided. As shown in FIG. 1, the multi-split air-conditioning system 10 includes an outdoor unit 11, a plurality of electronic expansion valves 12, a plurality of indoor units 13, and a controller 14 (not shown in FIG. 1). The outdoor unit 11 may be, for example, a device in the multi-split air-conditioning system 10 installed on an outside of a wall or on a roof of a house. The outdoor unit 11 is mainly configured to compress a refrigerant and drive the refrigerant to circulate in the multi-split air-conditioning system 10. The refrigerant is a substance that easily absorbs heat to become a gas and also easily releases heat to become a liquid. The indoor unit 13 may be, for example, a device in the multi-split air-conditioning system 10 installed indoors. The indoor unit 13 is mainly configured to transport a cold air or a hot air to the indoor space where the indoor unit 13 is located, so as to adjust a temperature of the indoor space.

In some embodiments, each of the plurality of indoor units 13 is correspondingly connected with an air pipe 15 and a liquid pipe 16, so as to communicate with the outdoor unit 11 through the air pipe 15 and the liquid pipe 16. The air pipe 15 is configured to transport a gaseous refrigerant or a two-phase refrigerant (i.e., a refrigerant having a gaseous refrigerant and a liquid refrigerant) between the outdoor unit 11 and the indoor unit 13. The liquid pipe 16 is configured to transport a liquid refrigerant or a two-phase refrigerant between the outdoor unit 11 and the indoor unit 13. The air pipes 15 and the liquid pipes 16 may be collectively referred to as a pipe line.

In some examples, the plurality of electronic expansion valves 12 correspond to the plurality of indoor units 13 respectively. The plurality of electronic expansion valves 12 are each disposed in the liquid pipe 16 connected to the corresponding indoor unit 13 and configured to control a refrigerant output amount or a refrigerant input amount of the corresponding indoor unit 13.

It will be noted that the plurality of electronic expansion valves 12 may be independent from the plurality of indoor units 13 (as shown in FIG. 1) respectively, or may belong to the plurality of indoor units 13 respectively. Subsequent embodiments are described by considering an example in which the plurality of electronic expansion valves 12 are independent from the plurality of indoor units 13 respectively.

In some embodiments, the outdoor unit 11 includes a compressor 111, an outdoor heat exchanger 112, a gas-liquid separator 113, a four-way valve 114, and an outdoor fan 115. An air outlet of the compressor 111 is connected to a port D of the four-way valve 114, and an air inlet of the compressor 111 is connected to an air outlet of the gas-liquid separator 113. An air inlet of the gas-liquid separator 113 is connected to a port S of the four-way valve 114. A port C of the four-way valve 114 is connected to a first end of the outdoor heat exchanger 112, and a port E of the four-way valve 114 is connected to the air pipes 15. A second end of the outdoor heat exchanger 112 is connected to the liquid pipes 16.

In some embodiments, each of the plurality of indoor units 13 includes an indoor heat exchanger 131, an indoor fan 132, an air outlet 133, and an air inlet 134. A first end of the indoor heat exchanger 131 is connected to the corresponding air pipe 15, and a second end of the indoor heat exchanger 131 is connected to the corresponding liquid pipe 16. The air outlet 133 is connected to the indoor heat exchanger 131 through an air outlet duct, and the air inlet 134 is connected to the indoor heat exchanger 131 through an air inlet duct.

It will be noted that the structure shown in FIG. 1 is an exemplary structure of the multi-split air-conditioning system 10, and the multi-split air-conditioning system 10 may include more, fewer, or different components than components shown in FIG. 1. For example, the outdoor unit 11 may further include an outdoor fan motor for driving the outdoor fan 115 to operate, and the indoor unit 13 may further include a display and an indoor fan motor for driving the indoor fan 132 to operate. In a case where the indoor unit 13 includes a display, the display may be configured to display the temperature of the indoor space where the indoor unit 13 is located, and/or, the display may be configured to display an operating state of the multi-split air-conditioning system 10.

In some embodiments, as shown in FIG. 2, the controller 14 is coupled to the compressor 111, the four-way valve 114, and the outdoor fan 115 in the outdoor unit 11, coupled to the plurality of electronic expansion valves 12, and coupled to the indoor fans 132 of the plurality of indoor units 13. The controller 14 is configured to control operating states of the components coupled with the controller 14.

The controller 14 is also coupled to a plurality of temperature sensors and a plurality of pressure sensors, so as to obtain temperature values and pressure values of a plurality of components in the multi-split air-conditioning system 10. The arrangement manner of the plurality of temperature sensors and the plurality of pressure sensors will be described in subsequent embodiments.

In addition, the controller 14 is also coupled to a communication device 109, so as to establish a communication connection with other devices (e.g., terminal devices) through the communication device 109, thereby sending and receiving communication signals. For example, the communication device 109 may include a radio frequency (RF) device, a cellular device, a Wi-Fi device, and a global positioning system (GPS) device.

In some examples, the controller 14 refers to a device that may generate an operation control signal according to an instruction operation code and a timing signal, so as to instruct the multi-split air-conditioning system 10 to execute a control instruction. For example, the controller 14 may be a central processing unit (CPU), a general-purpose processor, a network processor (NP), a digital signal processing (DSP), a microprocessor, a microcontroller, a programmable logic device (PLD), or any combination thereof. The controller 14 may also be other devices with a processing function, such as circuits, devices or software modules, and the embodiments of the present disclosure are not limited thereto.

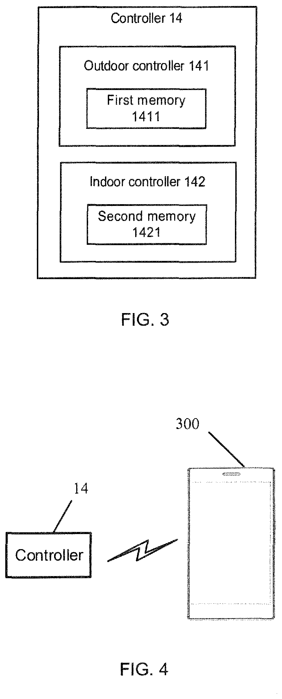

For example, as shown in FIG. 3, the controller 14 includes an outdoor controller 141 and an indoor controller 142. The outdoor controller 141 includes a first memory 1411 and is configured to control the outdoor unit 11 to perform relevant operations. The indoor controller 142 includes a second memory 1421 and is configured to control the plurality of indoor units 13 and the plurality of electronic expansion valves 12 to perform relevant operations. There is a wired or wireless communication connection between the indoor controller 142 and the outdoor controller 141. The outdoor controller 141 and the indoor controller 142 may belong to the outdoor unit 11 and the indoor unit 13, respectively. Alternatively, the outdoor controller 141 and the indoor controller 142 may be independently from the outdoor unit 11 and the indoor unit 13, respectively.

It will be noted that the structure of the controller 14 shown in FIG. 3 is an exemplary structure of the controller 14. For example, the outdoor controller 141 and the indoor controller 142 may also be integrated into one controller. The first memory 1411 and the second memory 1421 may also be integrated into one memory.

In some embodiments, the first memory 1411 and the second memory 1421 are configured to store application programs and data. The outdoor controller 141 executes the applications programs and data stored in the first memory 1411 and the indoor controller 142 executes the applications programs and data stored in the second memory 1421, so that functions and data processing of the multi-split air-conditioning system 10 may be executed. For example, the first memory 1411 and the second memory 1421 may include a high-speed random access memory, and may further include a non-volatile memory. The first memory 1411 and the second memory 1421 are, for example, magnetic disk storages, or flash memories.

In some embodiments, the user may control the operating state of the multi-split air-conditioning system 10 through a device that has established a communication connection with the controller 14. For example, as shown in FIG. 4, there is a communication connection between the controller 14 and a terminal device 300 of a user. The communication connection may be achieved by using various wired or wireless communication technologies, such as Ethernet, universal serial bus (USB), firewire, any cellular network communication technology (e.g., 3th generation mobile communication technology (3G), 4th generation mobile communication technology (4G), or 5th generation mobile communication technology (5G)), bluetooth, Wi-Fi, near field communication (NFC), or any other suitable communication technology.

The terminal device 300 may be, for example, a remote controller, a mobile phone, a tablet computer, a personal computer (PC), a personal digital assistant (PDA), a smart watch, a wearable electronic device, or an augmented reality (AR) device, a virtual reality (VR) device, a robot. FIG. 4 and subsequent embodiments are described by considering an example in which the terminal device 300 is a mobile phone, and the present disclosure does not limit the specific form of the terminal device 300.

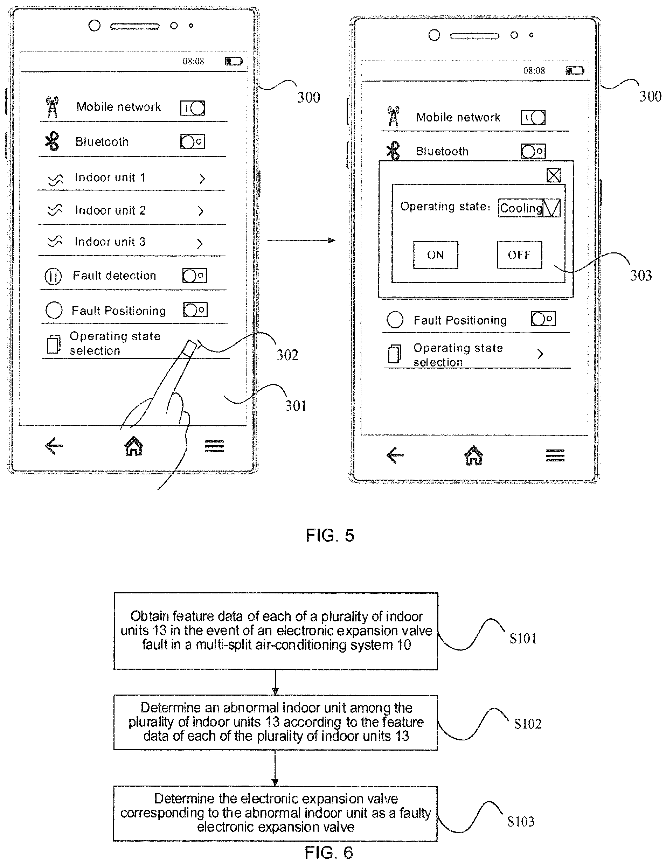

In this embodiment, as shown in FIG. 5, the terminal device 300 displays a management interface 301 of the multi-split air-conditioning system 10. The management interface 301 includes a first button 302 for managing the operating state of the multi-split air-conditioning system 10. In response to a clicking operation performed by the user on the first button 302 in the management interface 301, the terminal device 300 displays an operating state drop-down selection box 303 in the management interface 301. In response to an operating state selecting operation performed by the user in the operating state drop-down selection box 303, the terminal device 300 sends an operating instruction corresponding to the selection operation to the multi-split air-conditioning system 10, so that the multi-split air-conditioning system 10 operates in the operating state selected by the user.

In some embodiments, the multi-split air-conditioning system 10 operates in a cooling operating state, so as to reduce the temperature of the indoor space. In the cooling operating state, the controller 14 controls the compressor 111 to start operating, and controls the port D of the four-way valve 114 to communicate with the port C, and the port S to communicate with the port E.

In this way, the compressor 111 starts compressing the refrigerant, so that the refrigerant circulates in the multi-split air-conditioning system 10. For example, the compressor 111 compresses the gaseous refrigerant into a gaseous refrigerant with a high temperature a high pressure, and transports the compressed refrigerant to the first end of the outdoor heat exchanger 112 through the port D and the port C of the four-way valve 114, so that the gaseous refrigerant enters the outdoor heat exchanger 112. After the gaseous refrigerant with a high temperature a high pressure is liquefied into a liquid refrigerant with a low temperature and a low pressure in the outdoor heat exchanger 112, the refrigerant passes through the second end of the outdoor heat exchanger 112, the liquid pipes 16, and the plurality of electronic expansion valves 12 to the second ends of the plurality of indoor heat exchangers 131, so that the refrigerant enters the plurality of indoor heat exchangers 131. For any one of the plurality of indoor units 13, the liquid refrigerant with a low temperature and a low pressure is vaporized into a gaseous refrigerant in the indoor heat exchanger 131 of the indoor unit. As a result, the heat around the indoor heat exchanger 131 is absorbed and a temperature of the air inside the indoor unit is reduced, and the cooled air is transported to the outside of the indoor unit through the air outlet 133 of the indoor unit, so that the effect of reducing the temperature of the indoor space is achieved. Then, the vaporized gaseous refrigerant reaches the four-way valve 114 through the first end of the indoor heat exchanger 131 and the air pipe 15, and reaches the air inlet of the gas-liquid separator 113 through the port E and the port S of the four-way valve 114. The gaseous refrigerant may condense to produce a liquid during the transport from the indoor heat exchanger 131 to the gas-liquid separator 113. After the gas-liquid separator 113 separates the liquid from the gaseous refrigerant, the gaseous refrigerant is transported to the compressor 111, so that the recycling of the refrigerant is achieved.

In some other embodiments, the multi-split air-conditioning system 10 operates in a heating operating state, so as to increase the temperature of the indoor space. Different from the cooling operating state, in the heating operating state, the controller 14 controls the port D of the four-way valve 114 to communicate with the port E, and controls the port S to communicate with the port C.

In this way, the high temperature and high pressure gaseous refrigerant obtained after compression of the compressor 111 passes through the port D and the port E of the four-way valve 114 and enters from the air pipes 15 into the plurality of indoor heat exchangers 131. For any one of the plurality of indoor units 13, the gaseous refrigerant with a high temperature and a high pressure is liquefied into a liquid refrigerant with a low temperature and a low pressure in the indoor heat exchanger 131 of the indoor unit. As a result, heat is released to the surrounding of the indoor heat exchanger 131 and the temperature of the air inside the indoor unit is increased, and the heated air is transported to the outside of the indoor unit through the air outlet 133 of the indoor unit, so that the effect of increasing the temperature of the indoor space is achieved. Then, the liquid refrigerant with a low temperature and a low pressure flows out of the indoor heat exchanger 131 from the second end of the indoor heat exchanger 131 and enters the outdoor heat exchanger 112 through the plurality of electronic expansion valves 12 and the liquid pipes 16. The liquid refrigerant with a low temperature and a low pressure is vaporized into a gaseous refrigerant in the outdoor heat exchanger 112, and then is transported to the gas-liquid separator 113 through the port C and the port S of the four-way valve 114, and then back to the compressor 111.

In the cooling operating state or the heating operating state, the outdoor fan 115 is configured to start operating due to control of the controller 14, so as to discharge the heat generated by the liquefaction of the refrigerant or the cold generated by the vaporization of the refrigerant in the outdoor heat exchanger 112 from the outdoor unit 11; the indoor fan 132 is configured to start operating due to the control of the controller 14, so as to discharge the cold generated by the vaporization of the refrigerant or the heat generated by the liquefaction of the refrigerant in the indoor heat exchanger 131 from the indoor unit 13, so that the temperature of the indoor space where the indoor unit 13 is located is adjusted.

In some embodiments, the air inlet 134 of the indoor unit 13 is configured to transport the air outside the indoor unit 13 to the inside of the indoor unit 13, so that the air is transported to the outside of the indoor unit 13 through the air outlet 133 after the temperature of the air is reduced or increased inside the indoor unit 13 by the indoor heat exchanger 131. In this way, the air in the indoor space where the indoor unit 13 is located may be circulated to cool down or heat up, thereby improving the cooling efficiency or heating efficiency of the multi-split air-conditioning system 10.

It will be noted that in a case where the multi-split air-conditioning system 10 operates in the cooling operating state, the outdoor heat exchanger 112 may also be referred to as a condenser, and the indoor heat exchanger 131 may also be referred to as an evaporator; in a case where the multi-split air-conditioning system 10 operates in the heating operating state, the outdoor heat exchanger 112 may also be referred to as an evaporator, and the indoor heat exchanger 131 may also be referred to as a condenser. In addition, a pressure value at the air outlet of the compressor 111 may be referred to as an exhaust pressure value, and may also be referred to as a condensation pressure value or a high pressure value; a pressure value at the air inlet of the compressor 111 may be referred to as a suction pressure value, and may also be referred to as an evaporation pressure value or a low pressure value.

In some embodiments, the electronic expansion valve 12 plays a role of reducing pressure of the refrigerant flowing through the electronic expansion valve 12 by expanding the refrigerant, so as to adjust a flow rate of the refrigerant in the pipe line. If an opening degree (i.e., a degree of opening) of the electronic expansion valve 12 decreases, a flow rate of the refrigerant passing through the electronic expansion valve 12 decreases. If the opening degree of the electronic expansion valve 12 increases, the flow rate of the refrigerant passing through the electronic expansion valve 12 increases. For example, if the multi-split air-conditioning system 10 is in the cooling operating state, the plurality of electronic expansion valves 12 are each located on a refrigerant input side of the corresponding indoor unit 13. Therefore, at this time, the plurality of electronic expansion valves 12 each control the refrigerant input amount of the corresponding indoor unit 13. If the multi-split air-conditioning system 10 is in the heating operating state, the plurality of electronic expansion valves 12 are each located on a refrigerant output side of the corresponding indoor unit 13. Therefore, at this time, the plurality of electronic expansion valves 12 each control the refrigerant output amount of the corresponding indoor unit 13.

As described in the background, in the related art, if an electronic expansion valve in the multi-split air-conditioning system 10 is faulty, professional maintenance personnel are required to observe and analyze the electronic expansion valves 12 in the entire multi-split air-conditioning system 10, so as to locate the faulty electronic expansion valve. After that, the professional maintenance personnel repairs or replaces the faulty electronic expansion valve, so that the electronic expansion valve in the multi-split air-conditioning system 10 is troubleshot. Therefore, the multi-split air-conditioning system 10 in the related art has a low fault positioning efficiency and a low automation degree of fault positioning.

In view of the above technical problems in the related art, the inventor of the present disclosure found through research that in a case where the plurality of electronic expansion valves 12 operate normally, a temperature difference between the temperature value of the liquid pipe 16 connected to any indoor unit and the temperature value of the air pipe 15 connected to the indoor unit is less than a certain threshold. In a case where an electronic expansion valve in the multi-split air-conditioning system 10 is faulty (e.g., the electronic expansion valve 12 cannot be opened normally), the temperature difference between the temperature value of the liquid pipe 16 connected to the indoor unit 13 corresponding to the faulty electronic expansion valve and the temperature value of the air pipe 15 connected to the indoor unit 13 is greater than the certain threshold. Therefore, whether the plurality of electronic expansion valves 12 are faulty may be determined by monitoring feature data (e.g., the temperature values of the liquid pipe 16 and the air pipe 15 connected to a same indoor unit 13) of the plurality of indoor units 13 during operation.

Some embodiments of the present disclosure provide a multi-split air-conditioning system 10 based on the above technical concept. In a case where an electronic expansion valve in the multi-split air-conditioning system 10 is faulty, the controller 14 in the multi-split air-conditioning system 10 may obtain feature data of the plurality of indoor units 13 in the multi-split air-conditioning system 10 and identify an abnormal indoor unit in the plurality of indoor units 13 according to the feature data, and then determine the electronic expansion valve 12 corresponding to the abnormal indoor unit as a faulty electronic expansion valve, so as to complete positioning of the faulty electronic expansion valve. In this way, after an electronic expansion valve in the multi-split air-conditioning system 10 is faulty, the faulty electronic expansion valve may be located without professional maintenance personnel manually identifying the plurality of electronic expansion valves 12 according to personal experience, so that the automation degree of fault positioning for the multi-split air-conditioning system 10 may be improved, and the efficiency of locating the faulty electronic expansion valve in the multi-split air-conditioning system 10 is improved.

The process of the controller 14 performing the fault positioning method will be described below with reference to the accompanying drawings.

In some embodiments, as shown in FIG. 6, the controller 14 is configured to perform step 101 to step 103 (S101 to S103).

In step 101, feature data of each of a plurality of indoor units 13 is obtained in a case where an electronic expansion valve in the multi-split air-conditioning system 10 is faulty.

The feature data of each indoor unit includes a temperature difference between a temperature value of the liquid pipe 16 correspondingly connected to the indoor unit and a temperature value of the air pipe 15 correspondingly connected to the indoor unit.

For example, the temperature difference may be a value obtained by subtracting the temperature value of the air pipe 15 correspondingly connected to the indoor unit from the temperature value of the liquid pipe 16 correspondingly connected to the indoor unit. Alternatively, the temperature difference may be a value obtained by subtracting the temperature value of the liquid pipe 16 correspondingly connected to the indoor unit from the temperature value of the air pipe 15 correspondingly connected to the indoor unit.

In some embodiments, the user may instruct the multi-split air-conditioning system 10 to turn on a fault detecting function and a fault positioning function through a device that has established a communication connection with the controller 14, so that the controller 14 starts to detect whether an electronic expansion valve is faulty and locate the faulty electronic expansion valve. It will be noted that the method for the controller 14 to detect whether an electronic expansion valve is faulty will be described in subsequent embodiments.

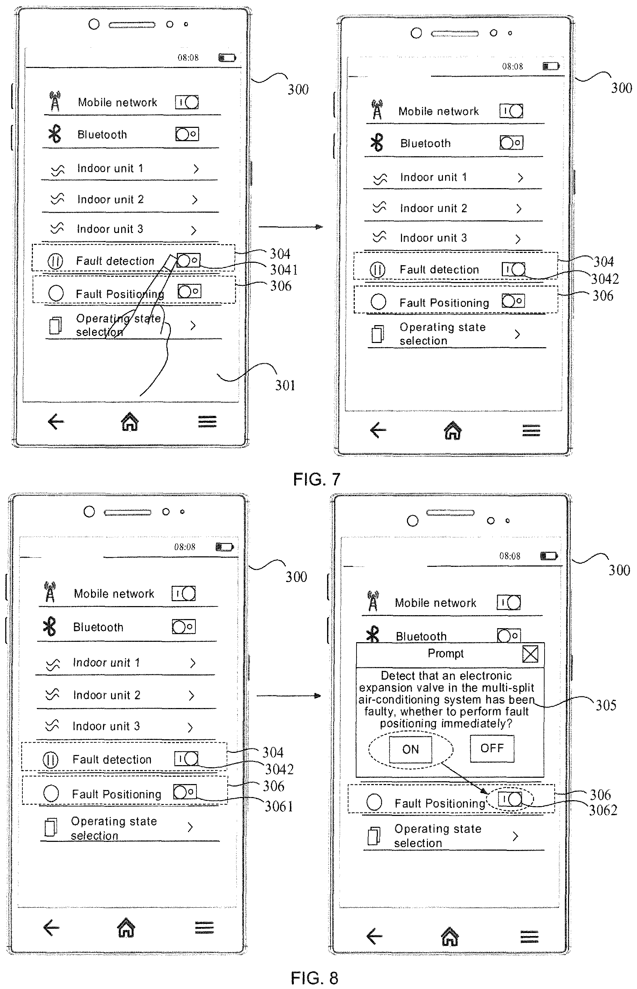

In an example where the device is the terminal device 300, as shown in FIGS. 7 and 8, a management interface 301 of the terminal device 300 includes a second button 304 for turning on or off the fault detecting function of the multi-split air-conditioning system 10, and a third button 306 for turning on or off the fault positioning function of the multi-split air-conditioning system 10. In a case where the fault detecting function (or the fault positioning function) of the multi-split air-conditioning system 10 is turned off, the second button 304 (or the third button 306) is in a first displaying state 3041 (or a third displaying state 3061). In a case where the fault detecting function (or the fault positioning function) of the multi-split air-conditioning system 10 is turned on, the second button 304 (or the third button 306) is in a second displaying state 3042 (or a fourth displaying state 3062). For example, in a case where the second button 304 is in the first displaying state 3041, the terminal device 300 may send an instruction to the controller 14 in response to the clicking operation performed by the user on the second button 304, so as to instruct the controller 14 to turn on the fault detecting function. After the fault detecting function is turned on, the controller 14 may send an instruction to the terminal device 300, so as to instruct the terminal device 300 to switch the displaying state of the second button 304 to the second displaying state 3042.

In some examples, if detecting that an electronic expansion valve in the multi-split air-conditioning system 10 is faulty, the controller 14 may send an instruction to the terminal device 300 through the communication device 109, so that the terminal device 300 displays a prompting box 305 as shown in FIG. 8. For example, prompting information in the prompting box 305 is "detect that an electronic expansion valve in the multi-split air-conditioning system has been faulty, whether to perform fault positioning immediately?", so as to prompt the user to select whether to turn on the fault positioning function. For example, the terminal device 300 may send an instruction to the controller 14 in response to the clicking operation performed by the user on the "ON" button in the prompting box 305, so as to instruct the controller 14 to turn on the fault positioning function. After the fault positioning function is turned on, the controller 14 may send an instruction to the terminal device 300, so as to instruct the terminal device 300 to switch the displaying state of the third button 306 from the third displaying state 3061 to the fourth displaying state 3062.

In some other embodiments, the multi-split air-conditioning system 10 may automatically turn on the fault detecting function and the fault positioning function after operating a preset period. For example, the preset period may be preset by a user or a manufacturer.

The controller 14 starts to obtain the feature data of the plurality of indoor units after the fault positioning function is turned on.

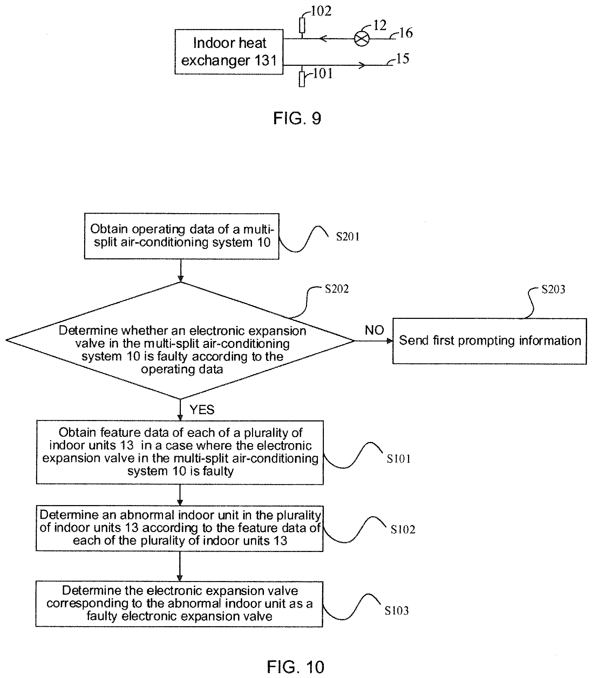

In some examples, as shown in FIG. 2, the multi-split air-conditioning system 10 includes a plurality of first temperature sensors 101 and a plurality of second temperature sensors 102, so as to detect the temperature values of the liquid pipes 16 connected to the plurality of indoor units 13 and the temperature values of the air pipes 15 connected to the plurality of indoor units 13. As shown in FIG. 9, the plurality of first temperature sensors 101 correspond to the indoor heat exchangers 131 of the plurality of indoor units 13 and are each disposed in the air pipe 15 connected to the corresponding indoor heat exchanger 131, so as to detect the temperature value of the corresponding air pipe 15. The plurality of second temperature sensors 102 correspond to the indoor heat exchangers 131 of the plurality of indoor units 13 and are each disposed in the liquid pipe 16 connected to the corresponding indoor heat exchanger 131, so as to detect the temperature value of the corresponding liquid pipe 16. The controller 14 is coupled to the plurality of first temperature sensors 101 and the plurality of second temperature sensors 102, so as to obtain the temperature difference between the temperature value of the liquid pipe 16 correspondingly connected to each of the plurality of indoor units 13 and the temperature value of the air pipe 15 correspondingly connected to the indoor unit.

In some embodiments, the feature data of each indoor unit may further include at least one of the following: an exhaust pressure value of the compressor 111, a suction pressure value of the compressor 111, an exhaust temperature value of the compressor 111, a suction temperature value of the compressor 111, an air outlet temperature value of the air outlet 133 of the indoor unit, or an air inlet temperature value of the air inlet 134 of the indoor unit. In this embodiment, in addition to the plurality of first temperature sensors 101 and the plurality of second temperature sensors 102, the multi-split air-conditioning system 10 includes a plurality of other temperature sensors and a plurality of pressure sensors, so that the feature data described above may be detected.

In some examples, as shown in FIG. 2, the multi-split air-conditioning system 10 includes a first pressure sensor 107 and a second pressure sensor 108. The first pressure sensor 107 is disposed at the air outlet of the compressor 111 and configured to detect the exhaust pressure value of the compressor 111. The second pressure sensor 108 is disposed at the air inlet of the compressor 111 and configured to detect the suction pressure value of the compressor 111. The controller 14 is coupled to the first pressure sensor 107 and the second pressure sensor 108, so as to obtain the exhaust pressure value and the suction pressure value.

In some examples, the multi-split air-conditioning system 10 includes a third temperature sensor 103, a fourth temperature sensor 104, a plurality of fifth temperature sensors 105, and a plurality of sixth temperature sensors 106. The third temperature sensor 103 is disposed at the air outlet of the compressor 111 and configured to detect the exhaust temperature value of the compressor 111. The fourth temperature sensor 104 is disposed at the air inlet of the compressor 111 and configured to detect the suction temperature value of the compressor 111. The plurality of fifth temperature sensors 105 correspond to the plurality of indoor units 13 and are each disposed at the air outlet 133 of the corresponding indoor unit 13, so as to detect the air outlet temperature value of the air outlet 133. The plurality of sixth temperature sensors 106 correspond to the plurality of indoor units 13 and are each disposed at the air inlet 134 of the corresponding indoor unit 13, so as to detect the air inlet temperature value of the air inlet 134. The controller 14 is coupled to the third temperature sensor 103, the fourth temperature sensor 104, the plurality of fifth temperature sensors 105, and the plurality of sixth temperature sensors 106, so as to obtain the exhaust temperature value, the suction temperature value, the air outlet temperatures, and the air inlet temperatures.

In step 102, an abnormal indoor unit in the plurality of indoor units 13 is determined according to the feature data of each of the plurality of indoor units 13.

The abnormal indoor unit refers to an indoor unit 13 in an abnormal operating state, which is the indoor unit 13 whose electronic expansion valve 12 is faulty. Similarly, in a case where the electronic expansion valve 12 corresponding to the indoor unit 13 is not faulty, it may be understood that the indoor unit 13 is in a normal operating state.

It will be noted that the fault of the electronic expansion valve in the multi-split air-conditioning system 10 will cause the feature data of the plurality of indoor units 13 to change. For example, in a case where the multi-split air-conditioning system 10 operates normally, the temperature difference between the temperature of the liquid pipe 16 correspondingly connected to any indoor unit and the temperature value of the air pipe 15 correspondingly connected to the indoor unit is less than the certain threshold. If a certain electronic expansion valve 12 cannot be opened normally due to the fault of the electronic expansion valve, the amount of refrigerant in the indoor unit 13 corresponding to the electronic expansion valve 12 is insufficient. As a result, the indoor unit 13 cannot normally evaporate or condense the refrigerant, and then reflected as that the temperature difference between the temperature value of the liquid pipe 16 connected to the indoor unit 13 and the temperature value of the air pipe 15 connected to the indoor unit 13 increases to exceed the certain threshold. Therefore, the controller 14 may determine whether the indoor unit is an abnormal indoor unit according to the feature data of any indoor unit.

In addition, since the components in the multi-split air-conditioning system 10 cooperate with each other to form a whole, if there is an abnormal indoor unit in the multi-split air-conditioning system 10, operating data of other components in the entire multi-split air-conditioning system 10 may also change. Therefore, any operating data such as the exhaust pressure value, the suction pressure value, the exhaust temperature value, the suction temperature value, the air outlet temperature value of the indoor unit, and the air inlet temperature value of the indoor unit may also be used as the feature data of the indoor unit.

In some embodiments, the controller 14 may input the feature data of each of the plurality of indoor units into a fault identifying model based on deep neural networks (DNN), so as to obtain a fault identifying result. The deep neural networks DNN are a technology in the field of machine learning (ML). Since the fault identifying model based on the deep neural networks DNN may output multiple labels, the fault identifying result may indicate whether each of the plurality of indoor units 13 is an abnormal indoor unit. In this way, the controller 14 may determine the abnormal indoor unit in the plurality of indoor units 13 according to the fault identifying result.

In some embodiments, the fault identifying model based on the deep neural networks DNN is stored in the memory of the controller 14 in advance. In some examples, the controller 14 or other devices with the processing capability may train the fault identifying model based on the deep neural networks according to a historical feature data collection of the plurality of indoor units 13 in the normal operating state and a historical feature data collection of the plurality of indoor units 13 in the abnormal operating state, so as to obtain the trained fault identifying model based on the deep neural networks DNN and store the trained fault identifying model in the memory of the controller 14.

In step 103, the electronic expansion valve corresponding to the abnormal indoor unit is determined as a faulty electronic expansion valve.

In some embodiments, the controller 14 may determine one or more abnormal indoor units from the plurality of indoor units 13, and then determine one or more electronic expansion valves 12 corresponding to the one or more abnormal indoor units as the faulty electronic expansion valve.

In a case where an electronic expansion valve in the multi-split air-conditioning system 10 is faulty, the multi-split air-conditioning system 10 provided in the embodiments of the present disclosure may obtain the feature data of the plurality of indoor units 13 in the multi-split air-conditioning system 10, and then determine the abnormal indoor unit in the plurality of indoor units 13 according to the feature data of the plurality of indoor units 13, and determine the electronic expansion valve 12 corresponding to the abnormal indoor unit as the faulty electronic expansion valve. In this way, the faulty electronic expansion valve in the multi-split air-conditioning system 10 may be accurately located, and there is no need for professional maintenance personnel based on personal experience to spend a lot of time observing and analyzing to determine the faulty electronic expansion valve. As a result, the accuracy and automation degree for locating the faulty electronic expansion valve in the multi-split air-conditioning system 10 may be improved, thereby improving the fault positioning efficiency of the multi-split air-conditioning system 10.

The method by which the controller 14 detects whether an electronic expansion valve in the multi-split air-conditioning system 10 is faulty is described with reference to the accompanying drawings. As shown in FIG. 10, the controller 14 may determine whether the electronic expansion valve in the multi-split air-conditioning system 10 is faulty by performing step 201 to step 203 (S201 to S203).

In step 201, operating data of the multi-split air-conditioning system 10 is obtained.

The operating data is parameter information generated during the operation of the multi-split air-conditioning system 10. The operating data includes, for example, at least one of the following: an operating current value of the compressor 111, an exhaust pressure value of the compressor 111, an exhaust temperature value of the compressor 111, the air outlet temperature values of the air outlets 133 of the plurality of indoor units 13, and the air inlet temperature values of the air inlets 134 of the plurality of indoor units 13.

In some embodiments, as mentioned above, the controller 14 may obtain the operating data of the multi-split air-conditioning system 10 after turning on the fault detecting function.

It will be noted that the examples of the feature data and the operating data described above in the embodiments of the present disclosure are exemplary, and the feature data and the operating data may also include other data related to the operation of the multi-split air-conditioning system 10, and the details will not be repeated herein.

In step 202, whether the electronic expansion valve in the multi-split air-conditioning system 10 is faulty is determined according to the operating data.

In some embodiments, the controller 14 may input the operating data of the multi-split air-conditioning system 10 into a fault diagnosis model based on a support vector machine (SVM), so as to obtain a fault diagnosis result. The fault diagnosis result indicates whether the electronic expansion valve in the multi-split air-conditioning system 10 is faulty. In this way, the controller 14 may determine whether the electronic expansion valve in the multi-split air-conditioning system 10 is faulty according to the fault diagnosis result. For example, the support vector machine SVM is a generalized linear classifier that performs binary classification on data by means of a supervised learning manner. The binary classification performance of the support vector machine SVM is good. Therefore, the accuracy of determining whether the electronic expansion valve in the multi-split air-conditioning system 10 is faulty may be improved through the fault diagnosis model based on the support vector machine SVM.

In some embodiments, the fault diagnosis model based on the support vector machine SVM is stored in the memory of the controller 14 in advance. In some examples, the controller 14 or other devices with the processing capability may train the fault diagnosis model based on the support vector machine SVM according to a historical operating data collection of the multi-split air-conditioning system 10 without the faulty electronic expansion valve and a historical operating data collection of the multi-split air-conditioning system 10 with the faulty electronic expansion valve, so as to obtain the trained fault diagnosis model based on the support vector machine SVM and store the trained fault diagnosis model in the memory of the controller 14.

In some embodiments, if determining that the electronic expansion valve in the multi-split air-conditioning system 10 is faulty, the controller 14 performs the step 101 to the step 103.

In some embodiments, if determining that no electronic expansion valve in the multi-split air-conditioning system 10 is faulty, the controller 14 performs the following step 203 (S203).

In step 203, first prompting information is sent.

The first prompting information is configured to prompt that no electronic expansion valve in the multi-split air-conditioning system 10 is faulty.

For example, in a case where the plurality of indoor units 13 include displays, the first prompting information may be texts, pictures, and other information displayed by the displays. Alternatively, in a case where the indoor unit 13 includes a speaker, the first prompting information may be sound information emitted by the speaker. Alternatively, in a case where the multi-split air-conditioning system 10 is communicatively connected to the terminal device of the user, the first prompting information may be texts, pictures, sounds, vibrations and other information output by the terminal device. It will be noted that the first prompting information may also be other forms of information, such as lighting information, and the present disclosure is not limited thereto.

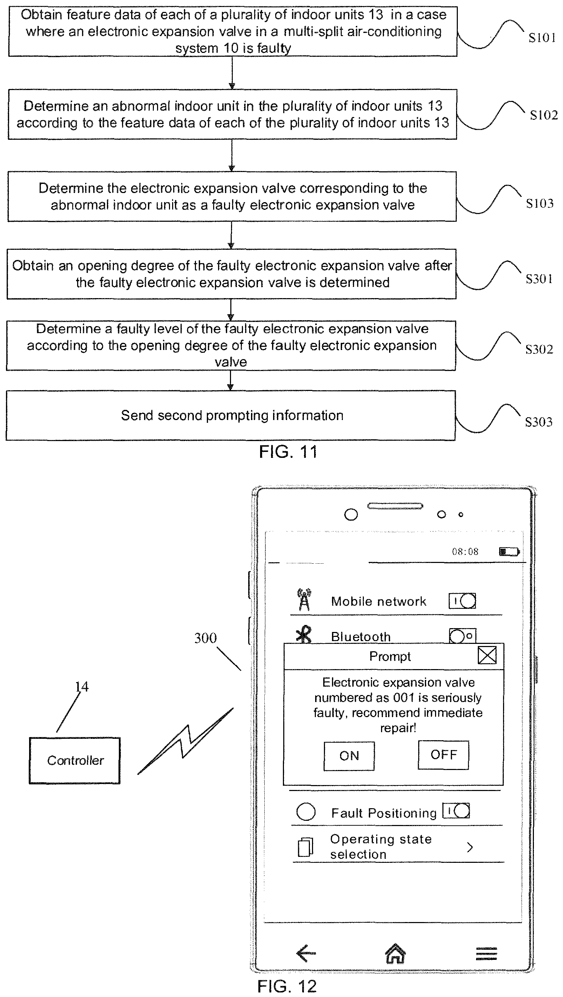

In some embodiments, after determining the faulty electronic expansion valve, that is, after the step 103, the controller 14 may send second prompting information, so as to prompt that the faulty electronic expansion valve has been faulty. In some examples, as shown in FIG. 11, the controller 14 sends the second prompting information by performing the following step 301 to step 303 (S301 to S303).

In step 301, an opening degree of the faulty electronic expansion valve is obtained after the faulty electronic expansion valve is determined.

As mentioned above, the controller 14 adjusts the refrigerant input amount or the refrigerant output amount of the indoor unit 13 corresponding to the electronic expansion valve 12 by adjusting the opening degree of the electronic expansion valve 12. Therefore, an abnormal opening degree of the electronic expansion valve corresponding to the abnormal indoor unit usually causes the abnormal indoor unit to be in the abnormal operating state. Moreover, the opening degree of the electronic expansion valve may represent a faulty degree of the electronic expansion valve.

In step 302, a faulty level of the faulty electronic expansion valve is determined according to the opening degree of the faulty electronic expansion valve.

In some embodiments, the controller 14 may determine the faulty level of the faulty electronic expansion valve according to a first corresponding relationship between the opening degree of the faulty electronic expansion valve and the faulty level. The first corresponding relationship may be stored in the memory of the controller 14 in advance.

It will be noted that normal opening degrees of the plurality of electronic expansion valves 12 are related to the operating states of the multi-split air-conditioning system 10.

In some examples, if the multi-split air-conditioning system 10 is in the heating operating state, the normal opening degrees of the plurality of electronic expansion valves 12 will be 100 % (that is, the plurality of electronic expansion valves 12 will be fully open). In this example, the less the opening degree of the faulty electronic expansion valve, the higher the faulty level of the faulty electronic expansion valve. For example, in a case where the multi-split air-conditioning system 10 is in the heating operating state, the first corresponding relationship between the opening degree of the faulty electronic expansion valve and the faulty level is as shown in Table 1 below.

Table 1

| Opening degree of a faulty electronic expansion valve | Faulty level |
| --- | --- |
| 75 % to 99 % | First level |
| 50 % to 74 % | Second level |
| 24 % to 49 % | Third level |
| Less than 23 % | Fourth level |

Referring to Table 1, if the opening degree of the faulty electronic expansion valve is within a range of 75 % to 99 %, inclusive, the controller 14 may determine that the faulty level of the faulty electronic expansion valve is a first level. If the opening degree of the faulty electronic expansion valve is within a range of 50 % to 74 %, inclusive, the controller 14 may determine that the faulty level of the faulty electronic expansion valve is a second level. If the opening degree of the faulty electronic expansion valve is within a range of 24 % to 49 %, inclusive, the controller 14 may determine that the faulty level of the faulty electronic expansion valve is a third level. If the opening degree of the faulty electronic expansion valve is less than 23 %, the controller 14 may determine that the faulty level of the faulty electronic expansion valve is a fourth level. It will be noted that the faulty level of the faulty electronic expansion valve increases in sequence and the urgency of repairing the faulty electronic expansion valve also increases in sequence from "first level", "second level", "third level" to "fourth level",

In some other examples, if the multi-split air-conditioning system 10 is in the cooling operating state, the normal opening degrees of the plurality of electronic expansion valves 12 will be within a range of 12 % to 13 %, inclusive. In this example, in a case where the opening degree of the faulty electronic expansion valve is greater than 13 %, the greater the opening degree of the faulty electronic expansion valve, the higher the faulty level of the faulty electronic expansion valve, and the more urgent it is to repair the faulty electronic expansion valve. For example, in a case where the multi-split air-conditioning system 10 is in the cooling operating state, the first corresponding relationship between the opening degree of the faulty electronic expansion valve and the faulty level is as shown in Table 2 below.

Table 2

| Opening degree of a faulty electronic expansion valve | Faulty level |
| --- | --- |
| 75 % to 100 % | Fourth level |
| 50 % to 74 % | Third level |
| 25 % to 49 % | Second level |
| 14 % to 24 % | First level |
| Less than 12 % | First level |

Referring to Table 2, if the opening degree of the faulty electronic expansion valve is within a range of 75 % to 100 %, inclusive, the controller 14 may determine that the faulty level of the faulty electronic expansion valve is a fourth level. If the opening degree of the faulty electronic expansion valve is within a range of 50 % to 74 %, inclusive, the controller 14 may determine that the faulty level of the faulty electronic expansion valve is a third level. If the opening degree of the faulty electronic expansion valve is within a range of 25 % to 49 %, inclusive, the controller 14 may determine that the faulty level of the faulty electronic expansion valve is a second level. If the opening degree of the faulty electronic expansion valve is within a range of 14 % to 24 %, or less than 12%, inclusive, the controller 14 may determine that the faulty level of the faulty electronic expansion valve is a first level.

In step 303, second prompting information is sent.

The second prompting information is configured to prompt the faulty level of the faulty electronic expansion valve.

In some embodiments, similar to the manner of sending the first prompting information in the step 203, the controller 14 may send the second prompting information by means of the display of the indoor unit 13 (e.g., the abnormal indoor unit), the speaker, the terminal device, or the like. For example, in an example where the faulty level of the faulty electronic expansion valve is the fourth level and the number of the faulty electronic expansion valve is 001, as shown in FIG. 12, the second prompting information may be, for example, a text that "Electronic expansion valve numbered as 001 is seriously faulty, recommend immediate repair!".

After locating the faulty electronic expansion valve in the multi-split air-conditioning system 10, the multi-split air-conditioning system 10 in the embodiments may determine the faulty level of the faulty electronic expansion valve according to the first corresponding relationship between the opening degree of the faulty electronic expansion valve and the faulty level, and send the second prompting information corresponding to the faulty level of the faulty electronic expansion valve, which is conducive to prompting the user to reasonably arrange the maintenance operation of the faulty electronic expansion valve according to the faulty level of the faulty electronic expansion valve, thereby avoiding the decrease of cooling or heating effect of the multi-split air-conditioning system 10 caused by the faulty electronic expansion valve.

In some embodiments of the present disclosure, a fault positioning method for a multi-split air-conditioning system is further provided. The multi-split air-conditioning system may be, for example, the multi-split air-conditioning system 10, and the method may, for example, include steps performed by the controller 14. The beneficial effects of the method include at least the beneficial effects of the multi-split air-conditioning system 10, and the details will not be repeated herein.

The multi-split air-conditioning systems of different types have different operating data, in related art. Therefore, it is necessary to collect the operating data of the multi-split air-conditioning systems of various types in the normal operating state and the operating data of the multi-split air-conditioning systems with various types in the abnormal operating state (a faulty operating state) as a sample collection, so as to establish a fault diagnosis model. In this way, the fault diagnosis model may be applied to the multi-split air-conditioning systems of multiple types, thereby improving the adaptability and accuracy for fault diagnosis of the multi-split air-conditioning system by using the fault diagnosis model. However, since it is necessary to collect the operating data of the multi-split air-conditioning systems of multiple types, such fault diagnosis model training method will lead to a long establishment period of the fault diagnosis model, which leads to a low fault diagnosis efficiency of multi-split air-conditioning system by using the fault diagnosis model.

Based on the technical problems, in some embodiments of the present disclosure, a fault diagnosis model training method of a multi-split air-conditioning system is further provided. The method may establish a first feature offset space of a first multi-split air-conditioning system according to values (i.e., normal values of the operating data) of the operating data of the first multi-split air-conditioning system in the normal operating state and values (i.e., faulty values of the operating data) of the operating data of the first multi-split air-conditioning system when various faults occur in the first multi-split air-conditioning system, and correct the first feature offset space to obtain a second feature offset space of a second multi-split air conditioner according to differences between the normal values of the operating data of the first multi-split air conditioner and normal values of the operating data of the second multi-split air conditioner. As a result, faulty values of the operating data of the second multi-split air-conditioning system may be obtained according to the second feature offset space and the normal values of the operating data of the second multi-split air-conditioning system, which may be used to establish the fault diagnosis model of the second multi-split air-conditioning system. In this way, in the process of establishing the fault diagnosis model of the second multi-split air-conditioning system, there is no need to collect the operating data of the second multi-split air-conditioning system in various faulty operating states in practical situations, so that the establishment period of the fault diagnosis model is shortened, thereby improving the fault diagnosis efficiency of the multi-split air-conditioning system by using the fault diagnosis model.

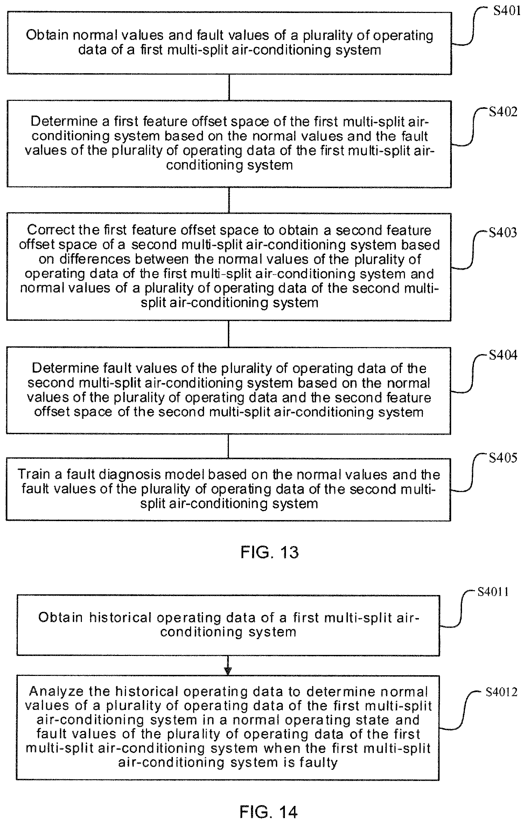

As shown in FIG. 13, the above fault diagnosis model training method for the multi-split air-conditioning system includes the following step 401 to 405 (S401 to S405). It will be noted that the execution body of the method may be the controller 14, or may be other device with a processing capability, such as a server. The subsequent embodiments are described by considering an example in which the controller 14 performs the method. In addition, for the structure and operating principle of the multi-split air-conditioning system, reference may be made to that of the multi-split air-conditioning system 10 in the previous embodiments, and the details will not be repeated herein.

In step 401, normal values and faulty values of a plurality of operating data of a first multi-split air-conditioning system are obtained.

In some embodiments, the first multi-split air-conditioning system may be referred to as an experimental multi-split air-conditioning system. A memory in the first multi-split air-conditioning system stores historical operating data of first multi-split air-conditioning system operating in various situations.

The operating data includes, for example, a suction temperature value of the compressor 111, an exhaust temperature value of the compressor 111, a suction pressure value of the compressor 111, an exhaust pressure value of the compressor 111, opening degrees of the plurality of electronic expansion valves 12, an operating current value of the compressor 111, an ambient temperature value of the outdoor unit 11, an average of the ambient temperature values of the plurality of indoor units, a suction superheat temperature of the compressor 111, an exhaust superheat temperature of the compressor 111, an operating temperature value of the outdoor unit 11, and operating temperature values of the plurality of indoor units 13.

For example, the suction superheat temperature refers to a difference between the suction temperature value of the compressor 111 and a saturation temperature value of the refrigerant at the suction pressure value; the exhaust superheat temperature refers to a difference between the exhaust temperature value of the compressor 111 and a saturation temperature value of the refrigerant at the exhaust pressure value. The operating temperature value of the outdoor unit 11 may be, for example, an operating temperature value of the outdoor heat exchanger 112. The operating temperature value of a certain indoor unit 13 in the plurality of indoor units 13 may be, for example, an operating temperature value of the indoor heat exchanger 131 of the certain indoor unit 13.

In some examples, as shown in FIG. 14, the step 101 may include the following step 4011 and step 4012 (S4011 and S4012).

In step 4011, historical operating data of the first multi-split air-conditioning system is obtained.

The historical operating data includes normal operating data generated by the first multi-split air-conditioning system in the normal operating state and various faulty operating data generated by the first multi-split air-conditioning system when various faults occur in the first multi-split air-conditioning system during the historical period. It will be noted that the present disclosure does not limit a duration of the historical period.

In step 4012, the historical operating data is analyzed to determine the normal values of the plurality of operating data of the first multi-split air-conditioning system in the normal operating state and the faulty values of the plurality of operating data of the first multi-split air-conditioning system when the first multi-split air-conditioning system is faulty.

It will be noted that the normal value of any one of the plurality of operating data is different from the faulty value of the operating data. Therefore, the controller 14 may distinguish the plurality of operating data generated by the multi-split air-conditioning system in the normal operating state and the plurality of operating data generated by the multi-split air-conditioning system when the multi-split air-conditioning system is faulty by analyzing the historical operating data of the multi-split air-conditioning system, so as to obtain the normal value and the faulty value of each of the plurality of operating data. For example, possible faults of the multi-split air-conditioning system include refrigerant leakage, excessive refrigerant participating in the cycle, or abnormal opening degree of the electronic expansion valve 12.

For example, the controller 14 may analyze the historical operating data according to preset value ranges corresponding to the plurality of operating data. If a value of any one of the plurality of operating data is within a corresponding preset value range, the value of the operating data is determined to be a normal value. If the value of any operating data is outside the corresponding preset value range, the value of the operating data is determined to be a faulty value. The preset value range may be, for example, preset by a worker or a manufacturer.

It will be noted that in a case where the multi-split air-conditioning system has different faults, the faulty values of the plurality of operating data are usually different. When analyzing the historical operating data of the first multi-split air conditioner, the controller 14 may correspond the faulty values of the first multi-split air-conditioning system with the fault occurring in the first multi-split air conditioner system.

In step 402, a first feature offset space of the first multi-split air-conditioning system is determined based on the normal values and the faulty values of the plurality of operating data of the first multi-split air-conditioning system.

It will be noted that since there are offsets between the normal values and the faulty values of the plurality of operating data, the first feature offset space of the first multi-split air-conditioning system may be established according to the offsets between the faulty values and the normal values of the plurality of operating data. The first feature offset space includes an offset of each of the plurality of operating data of the first multi-split air-conditioning system.

In some embodiments, a space composed of the normal values of the plurality of operating data of the multi-split air-conditioning system may be referred to as a feature space of the multi-split air-conditioning system.

For example, a first feature space of the first multi-split air-conditioning system may be represented as the following matrix:

$$X = \begin{bmatrix} x_1 & x_2 & \cdots & x_{n-1} & x_n \end{bmatrix}$$

Where, $x_j$ is a column vector of certain operating data, a value of the lowercase letter "j" is within a range of 1 to n, inclusive; n is an integer greater than 1.

For example, in a certain fault, the first feature offset space of the first multi-split air-conditioning system may be represented as the following:

$$\Delta \mathrm{xi} = \begin{bmatrix} \Delta x i_1 & \Delta x i_2 & \cdots & \Delta x i_{n-1} & \Delta x i_n \end{bmatrix}$$

Where, $\Delta x i_j$ is an offset of certain operating data, a value of the lowercase letter "j" is within a range of 1 to n; n is an integer greater than 1.

In step 403, the first feature offset space is corrected to obtain a second feature offset space of a second multi-split air-conditioning system based on differences between the normal values of the plurality of operating data of the first multi-split air-conditioning system and normal values of a plurality of operating data of the second multi-split air-conditioning system.

It will be noted that in a case where there are differences between the normal values of the plurality of operating data of the first multi-split air-conditioning system and the normal values of the plurality of operating data of the second multi-split air-conditioning system, it may be considered that the type of the first multi-split air-conditioning system is different from the type of the second multi-split air-conditioning system. For example, a type of the first multi-split air-conditioning system is a single-cooling type, and a type of the second multi-split air-conditioning system is a heat pump type.

In addition, the multi-split air-conditioning systems of different types usually have similar feature offset spaces due to the similar thermophysical principles that cause faults of the multi-split air-conditioning systems. Therefore, the first feature offset space may be corrected to obtain the second feature offset space of the second multi-split air-conditioning system based on the difference between the type of the first multi-split air-conditioning system and the type of the second multi-split air-conditioning system.

For example, the memory of the controller 14 stores a second corresponding relationship between the types of the multi-split air-conditioning systems and correction coefficients in advance. The correction coefficient is, for example, a ratio between the feature offset space of each of other multi-split air-conditioning systems and the first feature offset space of the first multi-split air-conditioning system. After determining the differences between the normal values of the plurality of operating data of the first multi-split air-conditioning system and the normal values of the plurality of operating data of the second multi-split air-conditioning system, the controller 14 may determine the type of the second multi-split air-conditioning system according to the type of the first multi-split air-conditioning system. As a result, the controller 14 may determine the correction coefficient of the second feature offset space relative to the first feature offset space according to the type of the second multi-split air-conditioning system and the second corresponding relationship, thereby correcting the first feature offset space according to the correction coefficient and obtaining the second feature offset space. For example, the controller 14 multiplies the correction coefficient with the first feature offset space, so as to obtain the second feature offset space.

For example, the second corresponding relationship may be obtained by means of experiments or simulations.

In step 404, faulty values of the plurality of operating data of the second multi-split air-conditioning system are determined based on the normal values of the plurality of operating data and the second feature offset space of the second multi-split air-conditioning system.

In some embodiments, the controller 14 may analyze the historical operating data of the second multi-split air-conditioning system in the normal operating state during the historical period, so as to determine the normal values of the plurality of operating data of the second multi-split air-conditioning system. As a result, the controller 14 obtains the faulty values of the plurality of operating data of the second multi-split air-conditioning system according to the normal values of the plurality of operating data and the second feature offset space of the second multi-split air-conditioning system.

For example, the controller 14 may add the normal values of the plurality of operating data of the second multi-split air-conditioning system and the second feature offset space, so as to obtain the faulty values of the plurality of operating data of the second multi-split air-conditioning system.

In step 405, a fault diagnosis model is trained based on the normal values and the faulty values of the plurality of operating data of the second multi-split air-conditioning system.

In some embodiments, the controller 14 may use the normal values and the faulty values of the plurality of operating data of the second multi-split air-conditioning system as a sample collection to train the fault diagnosis model.

In some examples, the fault diagnosis model is a fault diagnosis model based on one-dimensional convolutional neural networks (CNN). The convolutional neural networks are a multi-layer perceptron. An operating principle of the convolutional neural networks mainly involves three basic concepts: local receptive field, pooling, and weight sharing. One-dimensional convolutional neural networks are a convolutional neural network with one-dimensional input data and has a classification capability. Therefore, one-dimensional convolutional neural networks may be used for fault detection and fault diagnosis of the multi-split air-conditioning system. The fault detection is a process of detecting whether a system is faulty, and the fault diagnosis refers to obtaining detailed information such as the fault type and the fault severity.

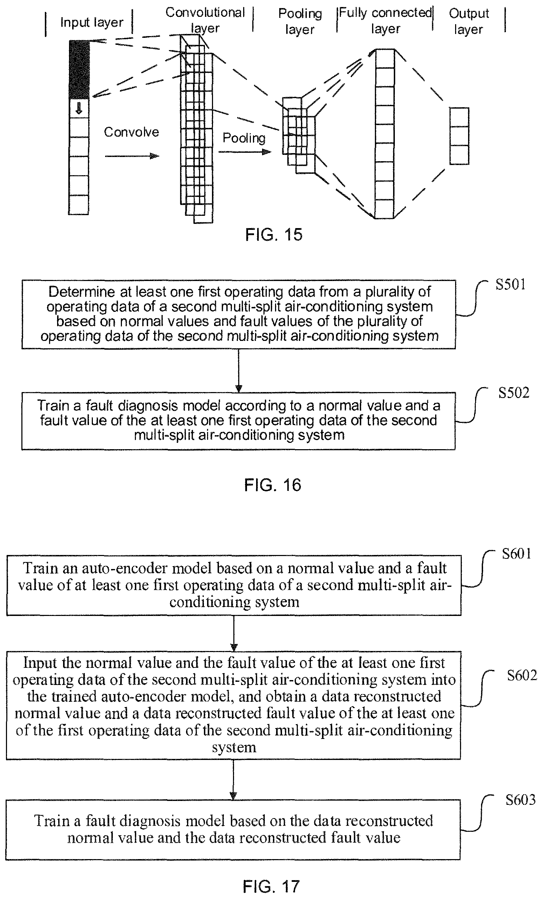

In some embodiments, as shown in FIG. 15, the fault diagnosis model may include an input layer, a convolutional layer, a pooling layer, a fully connected layer, and an output layer.

The convolutional layer is a key structure in the convolutional neural networks. The convolutional layer plays a role of using a series of filters to convolve the input data from the input layer, so as to form a series of feature mapping of original input data and output. In a case where a filter convolves input data of the convolutional layer, a local receptive field moves repeatedly over the input data. The data in the local receptive field performs a dot product operation with a weight matrix in the filter, and then forms an output matrix after being added to a fixed offset. The output matrix is feature mapping of the original input data. The filter has a characteristic of weight sharing for the input convolutional operation. That is to say, a filter uses a same weight matrix and offset for the data in the local receptive field.

For example, an activation function (e.g., a ReLU activation function) may be applied to the output of the convolutional layer, so as to perform delinearization, thereby improving a nonlinear fitting capacity of the convolutional layer. For example, the ReLU activation function may be represented as the following formula (1):

$$\sigma(\text{x}) = \begin{cases} x, x > 0 \\ 0, x < 0 \end{cases} \qquad \text{formula (1)}$$

The output $a_i$ of the i-th convolutional layer may be represented as the following formula (2):

$$a_i = \sigma\ (b_i + w_i \otimes a_{i-1}) \qquad \text{formula (2)}$$

Where, $\otimes$ is a convolutional operation, $\sigma$ is the ReLU activation function, $b_i$ is the offset, and $w_i$ is the weight matrix.

The output of the convolutional layer may be input into the pooling layer. The pooling layer divides the input data into a plurality of pooling regions, and summarizes each pooling region to form the output. The output of the pooling layer is a generalized and simplified feature mapping of the input of the pooling layer.

The fully connected layer plays a role of a classifier in the entire convolutional neural networks and may map distributed features into a sample marking space. That is to say, the fully connected layer is used to integrate the output of the pooling layer to obtain the output of the fully connected layer, and input the output of the fully connected layer into the output layer.

For example, a softmax layer may be used as the output layer of the convolutional neural networks. In this way, a classification result of the input data of the softmax layer may be determined according to a dimension where a maximum value of probability vectors in the output of the softmax layer is located.

The fault diagnosis model training method of the multi-split air-conditioning system provided in the embodiments of the present disclosure may obtain the first feature offset space representing the offsets between the normal values and the faulty values of the plurality of operating data of the first multi-split air-conditioning system, according to the normal values and the faulty values of the plurality of operating data of the first multi-split air-conditioning system, and correct the first feature offset space to obtain the second feature offset space of the second multi-split air-conditioning system according to the difference between the type of the second multi-split air-conditioning system and the type of the first multi-split air-conditioning system. As a result, the faulty values of the plurality of operating data of the second multi-split air-conditioning system may be obtained according to the second feature offset space and the normal values of the plurality of operating data of the second multi-split air-conditioning system. And then the fault diagnosis model may be trained by using the faulty values and the normal values of the plurality of operating data of the second multi-split air-conditioning system, so that a trained fault diagnosis model suitable for the second multi-split air-conditioning system is obtained. In this way, the fault diagnosis model of the second multi-split air-conditioning system may be established without collecting the faulty values of the plurality of operating data when various faults occur in the second multi-split air-conditioning system in the actual operating state, so that the establishment period of the fault diagnosis model is shortened, thereby improving the fault diagnosis efficiency of the second multi-split air-conditioning system by using the fault diagnosis model.

In some examples, as shown in FIG. 16, the step 405 may include the following step 501 and step 502 (S501 and S502).

In step 501, at least one first operating data from the plurality of operating data of the second multi-split air-conditioning system is determined based on the normal values and the faulty values of the plurality of operating data of the second multi-split air-conditioning system.

It will be noted that the plurality of operating data of the second multi-split air-conditioning system may be mixed with some redundant operating data that is irrelevant to training the fault diagnosis model. In order to improve a training speed of the fault diagnosis model, the plurality of operating data need to be sifted. For example, the at least one first operating data is operating data common to the multi-split air-conditioning systems of different types and highly relevant to the training of the fault diagnosis model.

For example, the controller 14 may calculate the difference between the normal value and the faulty value of each of the plurality of operating data of the second multi-split air-conditioning system, and determine operating data corresponding to the difference of the plurality of differences that is greater than a preset threshold as alternative operating data, and then select at least one operating data common to the multi-split air-conditioning systems of various types from the alternative operating data as first operating data. The preset threshold may be set by a worker or a manufacturer in advance.

It will be noted that the greater the difference between the normal value and the faulty value of certain operating data, the more the operating data may reflect the fault of the second multi-split air-conditioning system. Therefore, the operating data is used as the first operating data for training the fault detection model, which is conducive to improving the accuracy for fault detection by the trained fault detection model.

In step 502, the fault diagnosis model is trained according to the normal value and faulty value of the at least one first operating data of the second multi-split air-conditioning system.

The fault diagnosis model training method of the multi-split air-conditioning system in the embodiments may determine at least one first operating data from the plurality of operational data of the second multi-split air-conditioning system by sifting the plurality of operating data of the second multi-split air-conditioning system, thereby training the fault diagnosis model by using the normal value and faulty value of the at least one first operating data. Since the training sample collection of the fault diagnosis model is simplified, the training speed of the fault diagnosis model may be increased, so that the fault diagnosis efficiency of the multi-split air-conditioning system may be improved by using the fault diagnosis model.

In some embodiments, as shown in FIG. 17, the step 502 may include the following step 601 to step 603 (S601 and S603).

In step 601, an auto-encoder model is trained based on the normal value and the faulty value of at least one first operating data of the second multi-split air-conditioning system.

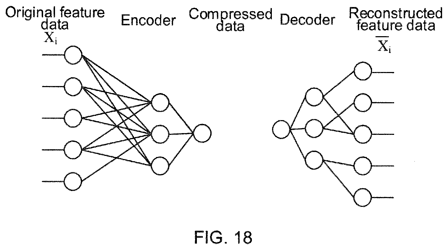

The auto-encoder model is an unsupervised learning model. For example, as shown in FIG. 18, the auto-encoder includes an encoder and a decoder. The encoder is configured to encode high-dimensional input data (i.e., original feature data) into a low-dimensional hidden variable (i.e., compressed data), so that the auto-encoder model may learn data with mass information. The decoder is configured to restore the low-dimensional hidden variable into the original dimension of the high-dimensional input data. The process in which the original feature data is encoded by the encoder and then decoded by the decoder is a data reconstruction process of the original feature data. For example, the process of training the auto-encoder model may include the following step 1 to step 4.

In step 1, the controller 14 converts the normal value and the faulty value of at least one first operating data into a feature vector matrix X which is equal to $\{X_1, X_2, ..., X_n\}$, and inputs the feature vector matrix into the auto-encoder model.

Where, $X_1 X_2, ..., X_n$ represents the normal values and the faulty values of the at least one first operating data.

In step 2, the encoder compresses the original feature data into the hidden layer by means of the manner shown in the following formula (3).

$$H = \sigma_e(W_e X + B_e) \qquad \text{formula (3)}$$

Where, $\sigma_e$ is the Sigmoid function, X is the original feature data collection, $W_e$ is a weight parameter of the encoder, $B_e$ is an offset of the encoder, and H is mapping of the original feature data in the hidden layer.

In step 3, the decoder reconstructs the original feature data by means of the manner shown in the following formula (4) and outputs the reconstructed feature data.

$$\bar{X} = \sigma_d(W_d H + B_d) \qquad \text{formula (4)}$$

Where, $\sigma_d$ is the Sigmoid function, $W_d$ is a weight parameter of the decoder, $B_d$ is an offset of the decoder, and $\bar{X}$ is the reconstructed original feature data.

In step 4, the auto-encoder model is trained, so as to reduce the reconstructed error and obtain the corresponding $W_e$, $W_d$, and $\bar{X}$.

For example, a calculation formula of the reconstructed error is as shown in the following formula (5):

$$L(X, \bar{X}) = -\sum_{i=1}^{d_X} X_i \log \bar{X}_i + (1 - X_i) \log(1 - \bar{X}_i) \qquad \text{formula (5)}$$

Where, $L(X, \bar{X})$ is the reconstructed error of the softmax, $X_i$ is the original feature data, and $\bar{X}_i$ is the reconstructed feature data.

In step 602, the normal value and the faulty value of at least one first operating data of the second multi-split air-conditioning system are input into the trained auto-encoder model, and a data reconstructed normal value and a data reconstructed faulty value of the at least one of the first operating data of the second multi-split air-conditioning system are obtained.

In step 603, the fault diagnosis model is trained based on the data reconstructed normal value and the data reconstructed faulty value.

The fault diagnosis model training method for the multi-split air-conditioning system in the embodiments uses the auto-encoder to reconstruct the normal value and faulty value of the at least one first operating data of the second multi-split air-conditioning system, which may reduce the data noise (i.e., random errors in the data due to measurement and other reasons) of the normal value and the faulty value of the at least one of the first operating data. As a result, the data of the normal value and the faulty value of the at least one of the first operating data that misleads the training of the fault detection model is removed, thereby improving the accuracy of fault detection by using the fault detection model.

A person skilled in the art will understand that the scope of disclosure in the present disclosure is not limited to specific embodiments discussed above and may modify and substitute some elements of the embodiments without departing from the spirits of the present disclosure. The scope of the present disclosure is limited by the appended claims.

**Claims**

1. A multi-split air-conditioning system, comprising:

   an outdoor unit;
   a plurality of indoor units, each of the plurality of indoor units being correspondingly connected with an air pipe and a liquid pipe, so as to communicate with the outdoor unit through the air pipe and the liquid pipe;
   a plurality of electronic expansion valves corresponding to the plurality of indoor units; the plurality of electronic expansion valves being each disposed in the liquid pipe connected to the corresponding indoor unit and configured to control a refrigerant output amount or a refrigerant input amount of the corresponding indoor unit; and
   a controller configured to:

      obtain feature data of each of the plurality of indoor units in a case where the electronic expansion valve in the multi-split air-conditioning system is faulty; wherein the feature data of each indoor unit includes a temperature difference between a temperature value of the liquid pipe correspondingly connected to the indoor unit and a temperature value of the air pipe correspondingly connected to the indoor unit;
      determine an abnormal indoor unit in the plurality of indoor units according to the feature data of each of the plurality of indoor units; and
      determine the electronic expansion valve corresponding to the abnormal indoor unit as a faulty electronic expansion valve.

2. The multi-split air-conditioning system according to claim 1, wherein

   the controller is configured to:
   input the feature data of each of the plurality of indoor units into a fault identifying model based on deep neural networks (DNN), and determine the abnormal indoor unit in the plurality of indoor units according to a fault identifying result of the fault identifying model;
   the outdoor unit includes a compressor;
   each of the plurality of indoor units includes an air outlet and an air inlet;
   the feature data of each indoor unit further includes at least one of following: an exhaust pressure value of the compressor, a suction pressure value of the compressor, an exhaust temperature value of the compressor, a suction temperature value of the compressor, an air outlet temperature value of the air outlet of the indoor unit, or an air inlet temperature value of the air inlet of the indoor unit.

3. The multi-split air-conditioning system according to claim 1 or 2, wherein

   the outdoor unit includes a compressor;
   each of the plurality of indoor units includes an air outlet and an air inlet;
   the controller is further configured to:

      obtain operating data of the multi-split air-conditioning system; wherein the operating data includes at least one of following: an operating current value of the compressor, an exhaust pressure value of the compressor, an exhaust temperature value of the compressor, air outlet temperature values of the air outlets of the plurality of indoor units, or air inlet temperature values of the air inlets of the plurality of indoor units; and
      determine whether the electronic expansion valve in the multi-split air-conditioning system is faulty according to the operating data.

4. The multi-split air-conditioning system according to claim 3, wherein
   the controller is configured to:

input the operating data into a fault diagnosis model based on a support vector machine (SVM), and determine whether the electronic expansion valve in the multi-split air-conditioning system is faulty according to a fault diagnosis result of the fault diagnosis model.

5. The multi-split air-conditioning system according to any one of claims 1 to 4, wherein the controller is further configured to:
send a first prompting information in a case where no electronic expansion valve in the multi-split air-conditioning system is faulty; wherein the first prompting information is configured to prompt that no electronic expansion valve in the multi-split air-conditioning system is faulty.

6. The multi-split air-conditioning system according to any one of claims 1 to 5, wherein the controller is further configured to:

obtain an opening degree of the faulty electronic expansion valve after determining the faulty electronic expansion valve;
determine a faulty level of the faulty electronic expansion valve according to the opening degree of the faulty electronic expansion valve; and
send a second prompting information; wherein the second prompting information is configured to prompt the faulty level of the faulty electronic expansion valve.

7. A fault positioning method for a multi-split air-conditioning system, wherein the multi-split air-conditioning system includes:

an outdoor unit;
a plurality of indoor units, each of the plurality of indoor units being correspondingly connected with an air pipe and a liquid pipe, so as to communicate with the outdoor unit through the air pipe and the liquid pipe; and
a plurality of electronic expansion valves corresponding to the plurality of indoor units; the plurality of electronic expansion valves being each disposed in the liquid pipe connected to the corresponding indoor unit and configured to control a refrigerant output amount or a refrigerant input amount of the corresponding indoor unit;
the method comprises:

obtaining feature data of each of the plurality of indoor units in a case where the electronic expansion valve in the multi-split air-conditioning system is faulty; wherein the feature data of each indoor unit includes a temperature difference between a temperature value of the liquid pipe correspondingly connected to the indoor unit and a temperature value of the air pipe correspondingly connected to the indoor unit;
determining an abnormal indoor unit in the plurality of indoor units according to the feature data of each of the plurality of indoor units; and
determining the electronic expansion valve corresponding to the abnormal indoor unit as a faulty electronic expansion valve.

8. The method according to claim 7, wherein the determining the abnormal indoor unit in the plurality of indoor units according to the feature data of each of the plurality of indoor units, includes:

inputting the feature data of each of the plurality of indoor units into a fault identifying model based on deep neural networks (DNN), and determining the abnormal indoor unit in the plurality of indoor units according to a fault identifying result of the fault identifying model,
the outdoor unit includes a compressor;
each of the plurality of indoor units includes an air outlet and an air inlet;
the feature data of each indoor unit further includes at least one of following: an exhaust pressure value of the compressor, a suction pressure value of the compressor, an exhaust temperature value of the compressor, a suction temperature value of the compressor, an air outlet temperature value of the air outlet of the indoor unit, or an air inlet temperature value of the air inlet of the indoor unit.

9. The method according to claim 7 or 8, wherein

the outdoor unit includes a compressor;
each of the plurality of indoor units includes an air outlet and an air inlet;
the method further comprises:

obtaining operating data of the multi-split air-conditioning system; wherein the operating data includes at least one of following: an operating current value of the compressor, an exhaust pressure value of the compressor, an exhaust temperature value of the compressor, air outlet temperature values of the air outlets of the plurality of indoor units, or air inlet temperature values of the air inlets of the plurality of indoor units; and determining whether the electronic expansion valve in the multi-split air-conditioning system is faulty according to the operating data.

10. The method according to claim 9, wherein the determining whether the electronic expansion valve in the multi-split air-conditioning system is faulty according to the operating data, includes:

inputting the operating data into a fault diagnosis model based on a support vector machine (SVM), and determining whether the electronic expansion valve in the multi-split air-conditioning system is faulty according to a fault diagnosis result of the fault diagnosis model.

11. The method according to any one of claims 7 to 10, further comprising:

sending a first prompting information in a case where no electronic expansion valve in the multi-split air-conditioning system is faulty; wherein the first prompting information is configured to prompt that no electronic expansion valve in the multi-split air-conditioning system is faulty.

12. The method according to any one of claims 7 to 11, further comprising:

obtaining an opening degree of the faulty electronic expansion valve after determining the faulty electronic expansion valve;

determining a faulty level of the faulty electronic expansion valve according to the opening degree of the faulty electronic expansion valve; and

sending a second prompting information; wherein the second prompting information is configured to prompt the faulty level of the faulty electronic expansion valve.

13. A fault diagnosis model training method for a multi-split air-conditioning system, comprising:

obtaining normal values and faulty values of a plurality of operating data of a first multi-split air-conditioning system;

determining a first feature offset space of the first multi-split air-conditioning system based on the normal values and the faulty values of the plurality of operating data of the first multi-split air-conditioning system; wherein the plurality of operating data include parameter information generated during operation of the multi-split air-conditioning system, and the first feature offset space includes a difference between the faulty value and the normal value of each of the plurality of operating data of the first multi-split air-conditioning system;

correcting the first feature offset space to obtain a second feature offset space of a second multi-split air-conditioning system based on differences between the normal values of the plurality of operating data of the first multi-split air-conditioning system and the normal values of the plurality of operating data of a second multi-split air-conditioning system;

determining faulty values of the plurality of operating data of the second multi-split air-conditioning system based on the normal values of the plurality of operating data and the second feature offset space of the second multi-split air-conditioning system; and

training a fault diagnosis model based on the normal values and the faulty values of the plurality of operating data of the second multi-split air-conditioning system.

14. The method according to claim 13, wherein the training the fault diagnosis model based on the normal values and the faulty values of the plurality of operating data of the second multi-split air-conditioning system, includes:

determining at least one first operating data from the plurality of operating data of the second multi-split air-conditioning system based on the normal values and the faulty values of the plurality of operating data of the second multi-split air-conditioning system; and

training the fault diagnosis model according to a normal value and a faulty value of the at least one first operating data of the second multi-split air-conditioning system.

15. The method according to claim 14, wherein the training the fault diagnosis model according to the normal value and the faulty value of the at least one first operating data of the second multi-split air-conditioning system, includes:

training an auto-encoder model based on the normal value and the faulty value of the at least one first operating data of the second multi-split air-conditioning system;

inputting the normal value and the faulty value of the at least one first operating data of the second multi-split air-conditioning system into the trained auto-encoder model, and obtaining a data reconstructed normal value and a data reconstructed faulty value of the at least one first operating data of the second multi-split air-conditioning system; and

training the fault diagnosis model based on the data reconstructed normal value and the data reconstructed faulty value.

16. The method according to any one of claims 13 to 15, wherein the multi-split air-conditioning system includes:

an outdoor unit including:
a compressor configured to compress a refrigerant, so as to circulate the refrigerant in the multi-split air-conditioning system;
a plurality of indoor units communicating with the outdoor unit; and
a plurality of electronic expansion valves corresponding to the plurality of indoor units and each configured to control a refrigerant output amount or a refrigerant input amount of the corresponding indoor unit;
wherein the plurality of operating data include a suction temperature value of the compressor, an exhaust temperature value of the compressor, a suction pressure value of the compressor, an exhaust pressure value of the compressor, opening degrees of the plurality of electronic expansion valves, an operating current value of the compressor, an ambient temperature value of the outdoor unit, an average of ambient temperature values of the plurality of indoor units, a suction superheat temperature of the compressor, an exhaust superheat temperature of the compressor, an operating temperature value of the outdoor unit, and operating temperature values of the plurality of indoor units.

17. The method according to any one of claims 13 to 16, wherein the obtaining the normal values and the faulty values of the plurality of operating data of the first multi-split air-conditioning system, includes:

obtaining historical operating data of the first multi-split air-conditioning system; and
analyzing the historical operating data to determine the normal values of the plurality of operating data of the first multi-split air-conditioning system in a normal operating state and the faulty values of the plurality of operating data of the first multi-split air-conditioning system when the first multi-split air-conditioning system is faulty.

FIG. 1

FIG. 2

FIG. 3

FIG. 4

FIG. 5

FIG. 6

FIG. 7

FIG. 8

FIG. 9

FIG. 10

Obtain feature data of each of a plurality of indoor units 13 in a case where an electronic expansion valve in a multi-split air-conditioning system 10 is faulty ~~~~ S101

Determine an abnormal indoor unit in the plurality of indoor units 13 according to the feature data of each of the plurality of indoor units 13 ~~~~ S102

Determine the electronic expansion valve corresponding to the abnormal indoor unit as a faulty electronic expansion valve ~~~~ S103

Obtain an opening degree of the faulty electronic expansion valve after the faulty electronic expansion valve is determined ~~~~ S301

Determine a faulty level of the faulty electronic expansion valve according to the opening degree of the faulty electronic expansion valve ~~~~ S302

Send second prompting information ~~~~ S303

FIG. 11

300

14

Controller

08:08

Mobile network

Bluetooth

Prompt

Electronic expansion valve numbered as 001 is seriously faulty, recommend immediate repair!

ON          OFF

Fault Positioning

Operating state selection          >

FIG. 12

```
┌─────────────────────────────────────────────────────┐  ⌐ S401
│  Obtain normal values and fault values of a plurality │ ⌡
│  of operating data of a first multi-split air-         │
│  conditioning system                                  │
└─────────────────────────────────────────────────────┘
                          │
┌─────────────────────────────────────────────────────┐  ⌐ S402
│  Determine a first feature offset space of the first  │ ⌡
│  multi-split air-conditioning system based on the     │
│  normal values and the fault values of the plurality  │
│  of operating data of the first multi-split air-      │
│  conditioning system                                  │
└─────────────────────────────────────────────────────┘
                          │
┌─────────────────────────────────────────────────────┐  ⌐ S403
│  Correct the first feature offset space to obtain a   │ ⌡
│  second feature offset space of a second multi-split  │
│  air-conditioning system based on differences between │
│  the normal values of the plurality of operating data │
│  of the first multi-split air-conditioning system and │
│  normal values of a plurality of operating data of    │
│  the second multi-split air-conditioning system       │
└─────────────────────────────────────────────────────┘
                          │
┌─────────────────────────────────────────────────────┐  ⌐ S404
│  Determine fault values of the plurality of operating │ ⌡
│  data of the second multi-split air-conditioning      │
│  system based on the normal values of the plurality   │
│  of operating data and the second feature offset      │
│  space of the second multi-split air-conditioning     │
│  system                                               │
└─────────────────────────────────────────────────────┘
                          │
┌─────────────────────────────────────────────────────┐  ⌐ S405
│  Train a fault diagnosis model based on the normal    │ ⌡
│  values and the fault values of the plurality of      │
│  operating data of the second multi-split air-        │
│  conditioning system                                  │
└─────────────────────────────────────────────────────┘
```

FIG. 13

```
┌─────────────────────────────────────────────────────┐  ⌐ S4011
│  Obtain historical operating data of a first          │ ⌡
│  multi-split air-conditioning system                  │
└─────────────────────────────────────────────────────┘
                          │
┌─────────────────────────────────────────────────────┐  ⌐ S4012
│  Analyze the historical operating data to determine   │ ⌡
│  normal values of a plurality of operating data of    │
│  the first multi-split air-conditioning system in a   │
│  normal operating state and fault values of the       │
│  plurality of operating data of the first multi-split │
│  air-conditioning system when the first multi-split   │
│  air-conditioning system is faulty                    │
└─────────────────────────────────────────────────────┘
```

FIG. 14

| Input layer | Convolutional layer | Pooling layer | Fully connected layer | Output layer |

Convolve →

Pooling →

## FIG. 15

Determine at least one first operating data from a plurality of operating data of a second multi-split air-conditioning system based on normal values and fault values of the plurality of operating data of the second multi-split air-conditioning system — S501

Train a fault diagnosis model according to a normal value and a fault value of the at least one first operating data of the second multi-split air-conditioning system — S502

## FIG. 16

Train an auto-encoder model based on a normal value and a fault value of at least one first operating data of a second multi-split air-conditioning system — S601

Input the normal value and the fault value of the at least one first operating data of the second multi-split air-conditioning system into the trained auto-encoder model, and obtain a data reconstructed normal value and a data reconstructed fault value of the at least one of the first operating data of the second multi-split air-conditioning system — S602

Train a fault diagnosis model based on the data reconstructed normal value and the data reconstructed fault value — S603

## FIG. 17

FIG. 18

| INTERNATIONAL SEARCH REPORT | International application No. |
|---|---|
| | **PCT/CN2023/071431** |

**A. CLASSIFICATION OF SUBJECT MATTER**

F24F1/0003(2019.01)i;F24F11/89(2018.01)i;F24F11/64(2018.01)i;F24F11/54(2018.01)i;F24F11/84(2018.01)i;F24F11/38(2018.01)i;G06N3/04(2023.01)i;F24F110/12(2018.01)i

According to International Patent Classification (IPC) or to both national classification and IPC

**B. FIELDS SEARCHED**

Minimum documentation searched (classification system followed by classification symbols)

IPC:F24F G06N

Documentation searched other than minimum documentation to the extent that such documents are included in the fields searched

Electronic data base consulted during the international search (name of data base and, where practicable, search terms used)

CNTXT, ENTXT, WPABS, VEN, CJFD: 多联机, 膨胀阀, 节流阀, 故障, 异常, 温度, 温差, 温度差, 正常值, 偏移, expansion valve, throttle valve, fault, failure, malfunction, abnormity, temperature, temperature difference, normal value, offset

**C. DOCUMENTS CONSIDERED TO BE RELEVANT**

| Category* | Citation of document, with indication, where appropriate, of the relevant passages | Relevant to claim No. |
|---|---|---|
| X | CN 109282424 A (GUANGDONG MIDEA HEATING & VENTILATION EQUIPMENT CO., LTD. et al.) 2019-01-29 (2019-01-29) description, paragraphs 43-137, and figures 1-7c | 1, 5-7, 11, 12 |
| Y | CN 109282424 A (GUANGDONG MIDEA HEATING & VENTILATION EQUIPMENT CO., LTD. et al.) 2019-01-29 (2019-01-29) description, paragraphs 43-137, and figures 1-7c | 2-4, 8-10 |
| Y | CN 113203589 A (HUAZHONG UNIVERSITY OF SCIENCE AND TECHNOLOGY et al.) 2021-08-03 (2021-08-03) description, paragraphs 40-84, and figures 1-5 | 2-4, 8-10 |
| A | CN 113203589 A (HUAZHONG UNIVERSITY OF SCIENCE AND TECHNOLOGY et al.) 2021-08-03 (2021-08-03) description, paragraphs 40-84, and figures 1-5 | 13-17 |
| Y | CN 110410936 A (NINGBO AUX ELECTRIC CO., LTD.) 2019-11-05 (2019-11-05) description, paragraphs 43-120, and figures 1-6 | 2-4, 8-10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 April 2023** | **05 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2023/071431**

| C. | DOCUMENTS CONSIDERED TO BE RELEVANT | |
|---|---|---|
| Category* | Citation of document, with indication, where appropriate, of the relevant passages | Relevant to claim No. |
| X | CN 106352472 A (GUANGDONG MIDEA HEATING & VENTILATION EQUIPMENT CO., LTD. et al.) 2017-01-25 (2017-01-25)<br>description, paragraphs 29-96, and figures 1-5 | 1, 5-7, 11, 12 |
| A | CN 106500238 A (ZHUHAI GREE ELECTRIC APPLIANCES INC.) 2017-03-15 (2017-03-15)<br>entire document | 1-12 |
| A | CN 105021381 A (GUANGDONG MIDEA HEATING & VENTILATION EQUIPMENT CO., LTD. et al.) 2015-11-04 (2015-11-04)<br>entire document | 1-12 |
| A | JP 2007333219 A (MITSUBISHI ELECTRIC BUILDING TECHNO-SERVICE CO., LTD.) 2007-12-27 (2007-12-27)<br>entire document | 1-12 |
| A | CN 112283876 A (QINGDAO HAIER AIR CONDITIONER ELECTRIC CO., LTD. et al.) 2021-01-29 (2021-01-29)<br>entire document | 13-17 |
| A | CN 113033913 A (SHANGHAI ELECTRIC GROUP CO., LTD.) 2021-06-25 (2021-06-25)<br>entire document | 13-17 |
| A | CN 112907781 A (NATIONAL UNIVERSITY OF DEFENSE TECHNOLOGY OF PLA) 2021-06-04 (2021-06-04)<br>entire document | 13-17 |
| A | CN 111650917 A (CHINA RAILWAY FOURTH SURVEY AND DESIGN INSTITUTE GROUP CO., LTD.) 2020-09-11 (2020-09-11)<br>entire document | 13-17 |
| A | CN 112766327 A (GREE ELECTRIC APPLIANCES (WUHAN) CO., LTD. et al.) 2021-05-07 (2021-05-07)<br>entire document | 13-17 |
| PX | CN 114754413 A (QINGDAO HISENSE HITACHI AIR CONDITIONING SYSTEM CO., LTD.) 2022-07-15 (2022-07-15)<br>description, paragraphs 47-172, and figures 1-16 | 1-12 |
| PX | CN 115095953 A (QINGDAO HISENSE HITACHI AIR CONDITIONING SYSTEM CO., LTD. et al.) 2022-09-23 (2022-09-23)<br>description, paragraphs 50-226, and figures 1-16 | 13-17 |

Form PCT/ISA/210 (second sheet) (July 2022)

**INTERNATIONAL SEARCH REPORT**
Information on patent family members

International application No.

**PCT/CN2023/071431**

| Patent document cited in search report | | | Publication date (day/month/year) | Patent family member(s) | | | Publication date (day/month/year) |
|---|---|---|---|---|---|---|---|
| CN | 109282424 | A | 29 January 2019 | None | | | |
| CN | 113203589 | A | 03 August 2021 | None | | | |
| CN | 110410936 | A | 05 November 2019 | None | | | |
| CN | 106352472 | A | 25 January 2017 | None | | | |
| CN | 106500238 | A | 15 March 2017 | None | | | |
| CN | 105021381 | A | 04 November 2015 | None | | | |
| JP | 2007333219 | A | 27 December 2007 | JP | 4762797 | B2 | 31 August 2011 |
| CN | 112283876 | A | 29 January 2021 | None | | | |
| CN | 113033913 | A | 25 June 2021 | None | | | |
| CN | 112907781 | A | 04 June 2021 | None | | | |
| CN | 111650917 | A | 11 September 2020 | None | | | |
| CN | 112766327 | A | 07 May 2021 | None | | | |
| CN | 114754413 | A | 15 July 2022 | None | | | |
| CN | 115095953 | A | 23 September 2022 | None | | | |

Form PCT/ISA/210 (patent family annex) (July 2022)

**EP 4 509 764 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210386517

- CN 202210682549